# EUROPEAN PATENT SPECIFICATION

(11) **EP 1 652 246 B1**
(45) Date of publication and mention of the grant of the patent: **12.10.2016**
(21) Application number: 04748175.9
(22) Date of filing: 27.07.2004
(51) Int. Cl.: H01M 2/02, H01M 4/04, H01M 4/36, H01M 10/0525, H01M 4/02

(54) **SECONDARY CELL ELECTRODE AND FABRICATION METHOD, AND SECONDARY CELL, COMPLEX CELL, AND VEHICLE**
ELEKTRODE FÜR EINE SEKUNDÄRZELLE UND DEREN HERSTELLUNG, DIE SEKUNDÄRZELLE, DER STACK UND DAS VEHIKEL
ÉLECTRODE D'ACCUMULATEUR, PROCÉDÉ DE FABRICATION ASSOCIÉ, ACCUMULATEUR, PILE COMPLEXE ET VÉHICULE

(30) Priority: 31.07.2003 JP 2003283974; 31.07.2003 JP 2003283975
(43) Date of publication of application: 03.05.2006
(73) Proprietor: NISSAN MOTOR COMPANY LIMITED, Yokohama-shi, Kanagawa 221-0023 (JP)
(72) Inventor: NAGAYAMA, Mori, Yokohama-shi, Kanagawa-ken (JP); SAITO, Takamitsu, Kanagawa 236-0058 (JP); SHIMAMURA, Osamu, Kanagawa 233-0015 (JP)
(74) Representative: Hoefer & Partner Patentanwälte mbB
(86) International application number: PCT/JP2004/011021
(87) International publication number: WO 2005/013400

(56) References cited:
- EP-A- 0 858 120
- EP-A- 1 265 302
- US-A1- 2002 018 930
- US-B1- 6 375 885

## Description

### Technical Field

The present invention relates to a secondary cell electrode, and particularly, to a nonaqueous electrolyte electrode and a gel electrolyte electrode, and further to a fabrication method of the same, as well as to a secondary cell employing the secondary cell electrode, a complex cell employing the secondary cell, and a vehicle employing the secondary cell or the complex cell.

### Background Art

Recent years have observed, on the background with a rising trend for environmental protection, demands for a promoted introduction of an electric vehicle (EV), a hybrid vehicle (HEV), and a fuel cell powered vehicle (FCV), as well as developments of cells for their drive motors.

For objectives needing high output and high energy density such as for driving a motor of EV, HEV, or FCV, it practically is difficult to cope with a big-scale simplex cell, and a typical measure is the use of a complex cell composed of a plurality of serially connected cells. For use to such a complex cell, Japanese Patent Application Laid-Open Publication No. 2003-151526 has proposed a thin laminate cell.

### Disclosure of the Invention

This laminate cell has a positive or negative polarized electrode formed with an electrode active material spread over a collector or foil, by using a coater or the like, thus having a three-dimensionally uniform concentration of solid material or electrolyte ingredients.

As will be discussed later, such a laminate cell suffers an unfavorable tendency for Li ions to be exhausted in a charge or discharge at a high current rate, resulting in a reduced cell performance such as charge or discharge capacity.

The present invention has been made with such points in view. It therefore is an object of the invention to provide a secondary cell electrode that works even at a high current rate, and a fabrication method therefor, as well as a secondary cell, a complex cell, and a vehicle employing such a secondary cell.

The present inventors have found using such an electrode that has an electrode active material layer low of the resistance to diffusion of Li ions supplied from an electrolyte layer, with a changed constitution of electrolyte in a patterning of the layer.

To achieve the object, a first aspect of the invention provides a secondary cell electrode comprising an electrode active material layer having a density gradient.

Another aspect of the invention provides a fabrication method comprising fabricating a secondary cell electrode comprising an electrode active material layer having a density gradient.

Another aspect of the invention provides a secondary cell comprising the secondary cell electrode.

Another aspect of the invention provides a complex cell comprising a plurality of secondary cells connected to each other.

Another aspect of the invention provides a complex cell comprising a plurality of secondary cells fabricated by the fabrication method, connected to each other.

Another aspect of the invention provides a vehicle including the secondary cell.

Another aspect of the invention provides a vehicle including a secondary cell fabricated by the fabrication method.

Other and further features, advantages, and benefits of the present invention will become more apparent from the following description taken in conjunction with the accompanying drawings.

### Brief Description of the Drawings

FIG 1 is a section of an electrode of a typical nonaqueous electrolyte secondary cell.
FIG. 2 is a section of an electrode of a nonaqueous electrolyte secondary cell according to a first embodiment of the invention.
FIG 3 is a section of an electrode of a nonaqueous electrolyte secondary cell according to a modification of the first embodiment.
FIG 4 is a section of an electrode of a gel electrolyte secondary cell according to a second embodiment of the invention.
FIG 5 is a section of an electrode of a gel electrolyte secondary cell according to a modification of the second embodiment.
FIG 6 is a block diagram of a secondary cell fabricator.
FIG 7 is a flowchart of control of the cell fabricator.
FIG 8 is a plan of a secondary cell electrode.
FIG 9 is a perspective view of a secondary cell.
FIG 10A is a plan view of a complex cell employing the secondary cell.
FIG 10B is a cross sectional view taken along line B-B of FIG. 10A.
FIG 10C is a cross sectional view taken along line C-C of FIG. 10A.
FIG. 11 is a perspective view of a battery block employing the complex cell.
FIG. 12 is a side view of a vehicle employing the battery block.

### Best Mode For Carrying Out the Invention

There will be detailed below preferred embodiments of the invention, as the best modes, with reference to the accompanying drawings. Like elements or members are designated by like reference characters.

The description is made by four Parts:
Part-1 Introduction to Embodiments
Part-2 Details of Embodiments
Part-3 Specific Examples
Part-4 Supplements

For ensured comprehension, similar comments, notes or pieces of description are repeated to refer to particular meanings they have where they are involved.

### Part-1 Introduction to Embodiments

This Part covers:
1.1 Typical structure of electrode
1.2 Introduction to first embodiment
1.3 Introduction to second embodiment
1.4 Fabrication and Installation

### 1.1 Typical structure of electrode

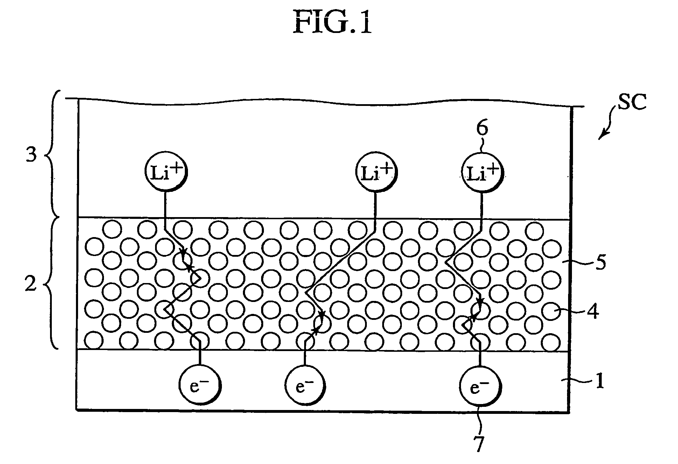

Fig. 1 shows, in schematic section, an electrode of a typical nonaqueous electrolyte secondary cell SC.

In the secondary cell SC, a single sheet of electric charge collector (referred herein to "current collector", or simply to "collector") 1 has an active material layer 2 coated thereon to form the electrode, which in turn has a film-shaped electrolyte layer 3 formed thereon.

Over an area of the electrode, the active material layer 2 is spread as an electrode-defining system of uniformly distributed particles of electrochemically active composite (referred herein collectively to "electrode active material", or simply to "active material") 4, with a body of electrolytic composite (referred herein to "electrolyte") 5 filling gaps in between.

Assuming the secondary cell SC to be a lithium ion cell, the electrolyte layer 3 contains Li ions 6, which can diffuse to move as carriers of positive charges.

The collector 1 has free electrons 7 to be conducted as carriers of negative charges.

The velocity of an entire electrode reaction depends on a resistance of the electrode active material layer 2 to the diffusion of Li ions 6 supplied from the electrolyte layer 3.

For instance, in a discharge process of the secondary cell SC, Li ions 6 in electrolyte 5 of the electrode active material layer 2 are absorbed into particles of electrode active material 4, rapidly.

Resultant reduction in concentration of Li ion 6 in the electrolyte 5 of electrode active material layer 2 is to be covered by diffusion of Li ions 6 from the electrolyte layer 3.

Like this, in accordance with a varying concentration of Li ion in the electrode active material layer 2, Li ions 6 are diffused out of or back into the electrolyte layer 3. Concurrently, electrons 7 of collector 1 are conducted via an electrochemically conductive material, for promotion of the electrode reaction.

The diffusion of Li ions 6 is slow relative to the conduction of electrons 7. At a high rate of charge or discharge, Li ions 6 tend to be exhausted, with an increased tendency, as they move into depths, where the ion mobility due to diffusion is reduced.

On the other hand, the conductivity by Li ion 6 increases with an increasing concentration of Li ion 6, but decreases with an excessively increased Li ion concentration that accompanies an increase in viscosity of the electrolyte 5, which restricts the diffusion of Li ion 6.

Again, at a high rate of charge or discharge, Li ions 6 tend to be exhausted, with an increased tendency, as they move into depths, where the ion mobility due to diffusion is reduced.

In the electrode SC which has a three dimensionally homogeneous electrode active material layer 2, at a high rate charge or discharge, the diffusion of Li ion 6 in this layer 2 fails to catch up a variation of Li ion concentration in a thickness or depth zone vicinal to or near the bottom where the upside of collector 1 extends, resulting in an occurrence of an over-voltage, thus failing to provide a sufficient charge or discharge capacity, as a problem.

As an effective solution to such an issue, the present inventors have devised providing a secondary cell electrode with an electrode active material layer having a continuously or stepwise changed gradient of ingredient concentration not to be three dimensionally homogeneous.

### 1.2 Introduction to first embodiment

As a first embodiment of the invention, the secondary cell electrode preferably comprises a nonaqueous electrolyte cell-oriented electrode in which the electrode active material layer on a collector is formed with a gradient of density developed with an increased solid concentration along a thickness from a surface of the electrode active material layer toward the collector.

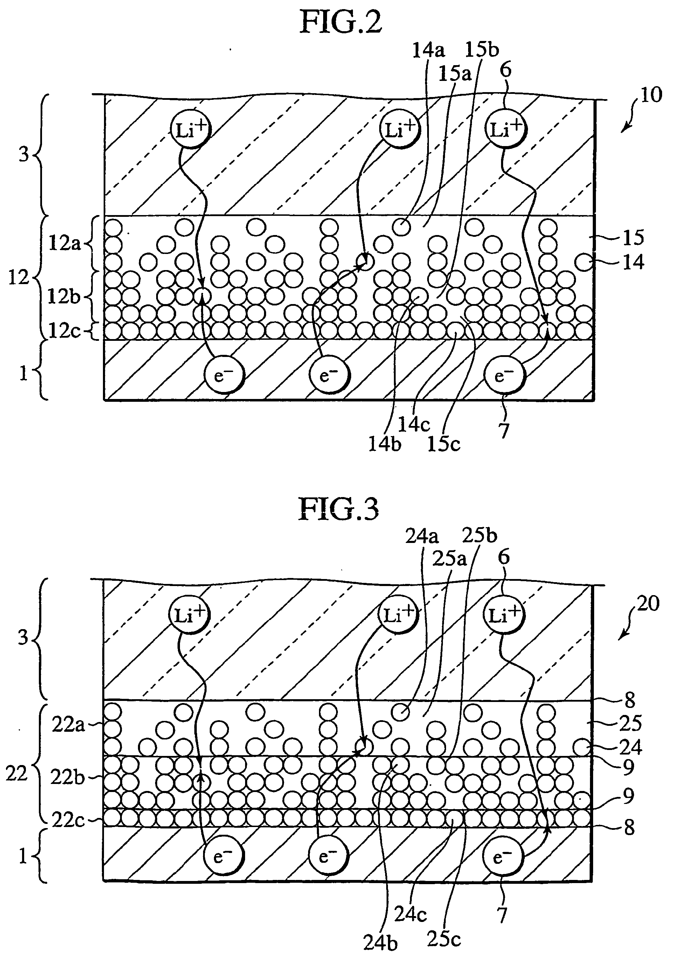

Fig. 2 shows, in schematic section, an electrode of a nonaqueous electrolyte secondary cell 10 according to the first embodiment.

In the secondary cell 10, a single sheet of electric charge collector 1 has an active material layer 12 spread thereon to form the electrode, which in turn has a film-shaped electrolyte layer 3 formed thereon.

Over an area of the electrode, the active material layer 12 is spread as an electrode-defining system of non-"three-dimensionally-uniformly" distributed particles of solid active material 14, with a liquid body of electrolyte 15 filling depth-wise varied gaps in between.

The solid active material 14 has a commensurately changed concentration providing a density gradient in the active material layer 12, as follows:

In a first depth zone 12a near a top surface of electrode active material layer 12, the concentration of solid active material 14a in electrolyte 15a is relatively small.

In a second depth zone 12b beneath the first depth zone 12a, the concentration of solid active material 14b in electrolyte 15b is medium.

In a third depth zone 12c beneath the second depth zone 12b and near the collector 1, the concentration of solid active material 14c in electrolyte 15c is relatively large.

The first depth zone 12a contains a greater volume of electrolyte 15 in which Li ions 6 can diffuse, and has a reduced diffusion resistance to Li ion 6.

The third depth zone 12c contains a greater quantity of solid material 14 such as electrode active material, electrically conductive material, and binder, and has a reduced contact resistance to the collector 1, allowing an increased mobility of electron 7.

As a result, Li ions 6 have an increased tendency to diffuse info the third zone 12c, and electrons 7 have an increased tendency to move from the collector 1, allowing for the electrode 10 to withstand a high rate charge or discharge.

It is noted that the concentration of solid active material 15 may preferably be changed continuously or stepwise, along the depth of electrode active material layer 12 or even in respective depth zone or zones 12a, 12b, 12c. At any depth, the concentration of solid material may well exclude two dimensional gradients thereof.

Fig. 3 shows, in schematic section, an electrode of a nonaqueous electrolyte secondary cell 20 according to a modification of the first embodiment.

This cell 20 is different from the first embodiment 10 in that an electrode active material layer 22 has its first, second, and third depth zones 22a, 22b, 22c layered as coats and laminated together, with continuously extending external boundaries 8, 8 against an electrolyte layer 3 and a collector 1, and likewise extending inter-layer boundaries 9, 9.

In the first depth zone 22a near a top surface of electrode active material layer 22, the concentration of solid active material 24a in electrolyte 25a is relatively small.

In the second depth zone 22b beneath the first depth zone 22a, the concentration of solid active material 24b in electrolyte 25b is medium.

In the third depth zone 22c beneath the second depth zone 22b and near the collector 1, the concentration of solid active material 24c in electrolyte 25c is relatively large.

The layered depth zones 22a, 22b, 22c may have their concentrations of solid material 25 in electrolyte 25 prepared homogeneous within associated coats (22a, 22b, 22c).

According to the first embodiment, the electrode active material layer may preferably be provided by laminating a plurality of thin-film layers having different densities due to different concentrations of the solid material.

The solid concentration may preferably be a concentration of the electrode active material.

The solid concentration may preferably be a concentration of the electrode active material, an electrically conductive material, and a binder.

The electrode active material may preferably have a thickness within a range of 1-100µm.

As the secondary cell electrode comprises a nonaqueous electrolyte cell-oriented electrode, its fabrication method may preferably comprise: (a) changing a quantity of a solid material to be added to compose an electrode active material layer, thereby preparing a plurality of kinds of electrode slurry having different densities due to different concentrations of the solid material; and (b) coating a collector with a sequence of the plurality of kinds of electrode slurry so that the concentration of the solid material is sequentially increased from a surface of the electrode active material layer toward the collector, thereby laminating a plurality of thin-film layers different in density, as well as in concentration of the solid material.

The thin-film layer may preferably be coated by a thickness within a range of 1-100µm in the step (b).

The electrode slurry may preferably be coated onto the collector by an ink jet method in the step (b).

The ink jet method may preferably employ a piezo system.

A secondary cell according to the first embodiment may preferably be a bipolar cell.

### 1.3 Introduction to second embodiment

As a second embodiment of the invention, the secondary cell electrode preferably comprises a gel electrolyte cell-oriented electrode in which the electrode active material layer on a collector has a gradient of density developed with (a) changed concentration(s) of (an) ingredient(s) (either an electrolyte salt or a film-forming material, or a combination thereof), along a thickness from a surface of the electrode active material layer toward the collector.

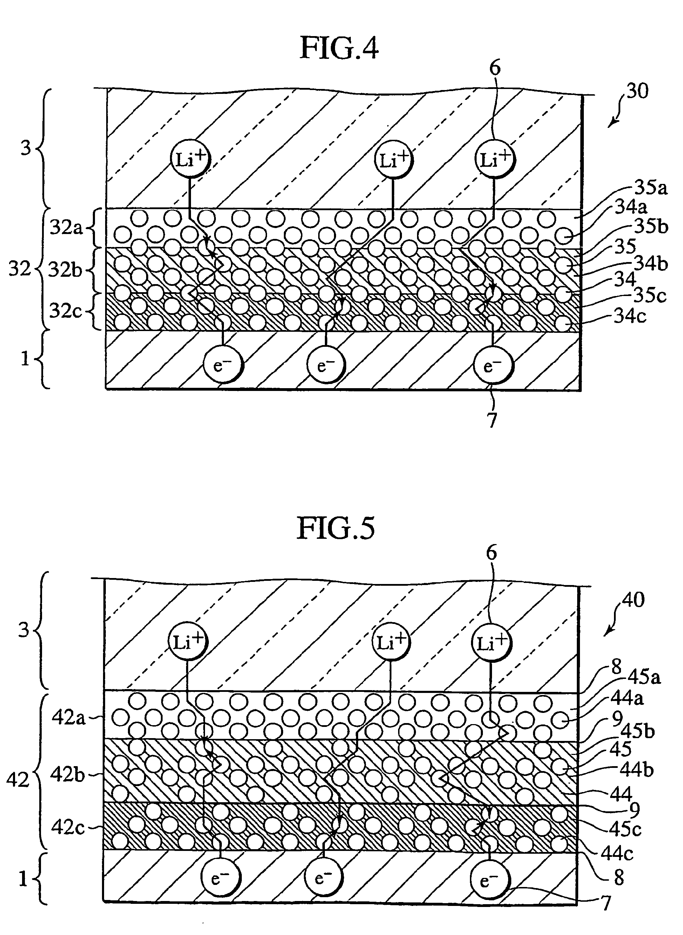

Fig. 4 shows, in schematic section, an electrode of a gel electrolyte secondary cell 30 according to the second embodiment.

In the secondary cell 30, a single sheet of electric charge collector 1 has an active material layer 32 spread thereon to form the electrode, which in turn has a film-shaped electrolyte layer 3 formed thereon.

Over an area of the electrode, the active material layer 32 is spread as an electrode-defining system of three dimensionally uniformly distributed particles of solid active material 34, with a non-"three-dimensionally-uniformly" prepared liquid body of electrolyte 35 filling even gaps in between.

The electrolyte 35 has a commensurately changed ingredient-concentration providing a density gradient of the active material layer 32, as follows:
A first depth zone 32a, located near a top surface of electrode active material layer 32, has a relatively small concentration with respect to an electrolyte salt in an electrolyte 34a filled between particles of solid active material 35a.
A second depth zone 32b, located beneath the first depth zone 32a, has a medium concentration with respect to the above-noted electrolyte salt in an electrolyte 34b filled between particles of solid active material 35b.
A third depth zone 32c, located beneath the second depth zone 32b and near the bottom of electrode active material layer 32 where a top surface of collector 1 extends, has a relatively large concentration with respect to the electrolyte salt in an electrolyte 34c filled between particles of solid active material 35c.

As a result, Li ions 6 have an increased tendency to be concentrated in the third zone 32c, and kept from being exhausted even at a high rate charge or discharge.

Further, along an electrical potential gradient due to a gradient of concentration of electrolyte salt, Li ions 6 as well as electrons 7 are accelerated, and have an increased tendency to diffuse from the electrolyte layer 3.

On the contrary, the concentration of electrolyte salt may be decreased along the depth from a top surface of the electrode active material layer 32 toward the collector 1. In this case, Li ions are rich in the first depth zone 32a, and tend to be released therefrom. In addition, due to the concentration gradient, Li ions have an increased tendency to diffuse.

The secondary cell 30 is thus adapted to cope with a high rate charge or discharge.

It is noted that the concentration gradient of electrolyte salt may preferably be changed continuously or stepwise, along the depth of electrode active material layer 32 or even in respective depth zone or zones 32a, 32b, 32c. At any depth, the concentration of electrolyte salt may well exclude two dimensional gradients.

The electrode active material layer may preferably be provided by laminating a plurality of thin-film layers different in concentration of the electrolyte salt.

Fig. 5 shows, in schematic section, an electrode of a gel electrolyte secondary cell 40 according to a modification of the second embodiment.

This cell 40 is different from the second embodiment 30 in that an electrode active material layer 42 has its first, second, and third depth zones 42a, 42b, 42c layered as coats and laminated together, with continuously extending external boundaries 8, 8 against an electrolyte layer 3 and a collector 1, and likewise extending inter-layer boundaries 9, 9. Designated at reference character 45 is an entire system of three-dimensionally uniformly distributed particles of solid active material.

The first depth zone 42a, located near a top surface of electrode active material layer 42, has a relatively small concentration with respect to an electrolyte salt in an electrolyte 44a filled between particles of solid active material 45a.

The second depth zone 42b, located beneath the first depth zone 42a, has a medium concentration with respect to the above-noted electrolyte salt in an electrolyte 44b filled between particles of solid active material 45b.

The third depth zone 42c, located beneath the second depth zone 42b and near the bottom of electrode active material layer 42 where a top surface of collector 1 extends, has a relatively large concentration with respect to the electrolyte salt in an electrolyte 44c filled between particles of solid active material 45c.

The layered depth zones 42a, 42b, 42c may have their concentrations of electrolyte salt in electrolyte 44 prepared homogeneous within associated coats (42a, 42b, 42c).

According to the second embodiment, as the secondary cell electrode comprises a gel electrolyte cell-oriented electrode, its fabrication method may preferably comprise: (a) changing a quantity of an electrolyte salt to be added to compose an electrode active material layer, thereby preparing a plurality of kinds of electrode slurry having different densities due to different concentrations of the electrolyte salt; and (b) coating a collector with a sequence of the plurality of kinds of electrode slurry, thereby laminating a plurality of thin-film layers different in density, as well as in a concentration of the electrolyte salt, such that the electrode active material layer has a density gradient developed with a gradient of the concentration of the electrolyte salt from a surface of the electrode active material layer toward the collector.

Or, as the secondary cell electrode comprise a gel electrolyte cell-oriented electrode, its fabrication method may preferably comprise: (a) changing a quantity of a film forming raw material to be added to compose an electrode active material layer, thereby preparing a plurality of kinds of electrode slurry having different densities due to different concentrations of the film forming raw material; and (b) coating a collector with a sequence of the plurality of kinds of electrode slurry, thereby laminating a plurality of thin-film layers different in density, as well as in a concentration of the film forming raw material, such that the electrode active material layer has a density gradient developed with a gradient of the concentration of the film forming raw material from a surface of the electrode active material layer toward the collector.

Or, as the secondary cell electrode comprise a gel electrolyte cell-oriented electrode, its fabrication method may preferably comprise: (a) changing quantities of an electrolyte salt and a film forming raw material to be added to compose an electrode active material layer, thereby preparing a plurality of kinds of electrode slurry having different densities due to different concentrations of the electrolyte salt and the film forming raw material; and (b) coating a collector with a sequence of the plurality of kinds of electrode slurry, thereby laminating a plurality of thin-film layers different in density, as well as in concentrations of the electrolyte salt and the film forming raw material, such that the electrode active material layer has a density gradient developed with gradients of the concentration of the electrolyte salt and the film forming raw material from a surface of the electrode active material layer toward the collector.

The thin-film layer may preferably be coated in a thickness within a range of 1-100µm in the step (b).

The electrode slurry may preferably be coated onto the collector by an ink jet method in the step (b).

The ink jet method may preferably employ a piezo system.

A secondary cell according to the second embodiment may preferably be a lithium ion secondary cell.

The secondary cell may preferably be a bipolar cell.

The secondary cell may preferably comprise: a positive electrode comprising a first collector, and a positive-electrode oriented active material layer having a density gradient developed with a gradient of a concentration of an electrolyte salt increased along a thickness from a surface of the positive-electrode oriented active material layer toward the first collector; a negative electrode comprising a second collector, and a negative-electrode oriented active material layer having a density gradient developed with a gradient of a concentration of an electrolyte salt decreased along a thickness from a surface of the negative-electrode oriented active material layer toward the second collector; and an electrolyte layer.

To the contrary, the secondary cell may preferably comprise: a positive electrode comprising a first collector, and a positive-electrode oriented active material layer having a density gradient developed with a gradient of a concentration of an electrolyte salt decreased along a thickness from a surface of the positive-electrode oriented active material layer toward the first collector; a negative electrode comprising a second collector, and a negative-electrode oriented active material layer having a density gradient developed with a gradient of a concentration of an electrolyte salt increased along a thickness from a surface of the negative-electrode oriented active material layer toward the second collector; and an electrolyte layer.

The negative-electrode oriented active material layer may preferably have the density gradient developed with a gradient of a concentration of a film forming material increased along the thickness from the surface of the negative-electrode oriented active material layer toward the second collector.

The secondary cell may preferably comprise a negative-electrode oriented active material layer having a density gradient developed with a gradient of a concentration of a film forming material increased along a thickness from a surface of the negative-electrode oriented electrolyte layer toward a collector.

### 1.4 Fabrication and Installation

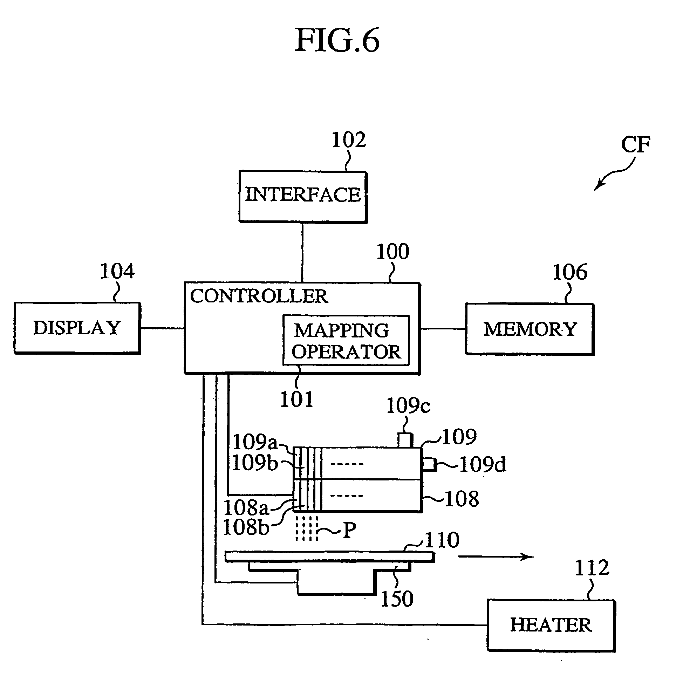

FIG 6 shows, in block diagram, a cell electrode fabricator CF for secondary cell electrodes according to an embodiment of the invention.

The cell electrode fabricator CF is configured with: a controller 100 as a computer provided with necessary peripherals including a multi-purpose interface 102, an interactive display 104, and a memory 106 for storing necessary programs and data; an ink jet system including a set of injection nozzles 108a, 108b, ... (collectively 108), and a set of ink containers 109a, 109b, ... (collectively 109); and associated facilities including a drying heater 112, and a carrier 150 for carrying a collector 110.

The controller 100 governs an entirety of the fabricator CF, and has a mapping operator 101 for processing four-dimensional data to map a temporal sequence of injection patterns of ink P, of which a selected one is indicated on the display 104, an entirety is stored in the memory 106, and demanded ones are transmitted together with commands to local controllers of the ink jet system and associated facilities to develop a current ink jet pattern on the collector 110.

The set of injection nozzles 108 may be one of, but not limited to, a piezoelectric system, a thermal system, and a bubble jet (trademark) system.

In the piezoelectric system, a piezoelectric element disposed at a bottom of an ink accumulating chamber is electrically deformed to thereby inject droplets of ink from an associated injection nozzle 108.

In the thermal system as well as the bubble jet system, a heating element heats ink, causing evaporation accompanying steam explosion, of which energy injects droplets of ink from an associated injection nozzle 108. The thermal and bubble jet systems are different in an area to be heated, but identical in principle.

The set of ink containers 109 are grouped into subsets (like 109a, 109b, ...) by kinds of handling active materials, and one-to-one connected to injection nozzles 108 (108a, 108b, ...). The set of ink containers 109 may be provided with a stirring module 109c for stirring ink, and a heater 109d for heating ink.

The heater 112 is for drying active materials deposited on the collector 110. After deposition of ink, the collector 110 travels, as it is carried by the carrier 150, to enter a drying furnace, where the heater 112 is installed.

The fabricator CF has a number of different kinds of ink, and selects a suitable one in accordance with an intended polarity of a respective electrode, and an intended concentration of solid material or electrolyte salt at an associated thickness zone of an active material layer of the electrode.

For example, in an ink group oriented for fabrication of a positive-pole electrode, any kind of ink contains ingredients of the active material layer of that electrode, while the proportions of ingredients are changed by the kind of ink.

Likewise, in another ink group oriented for fabrication of a negative-pole electrode, any kind of ink contains ingredients of an active material layer of that electrode, while the proportions of ingredients are changed by the kind of ink.

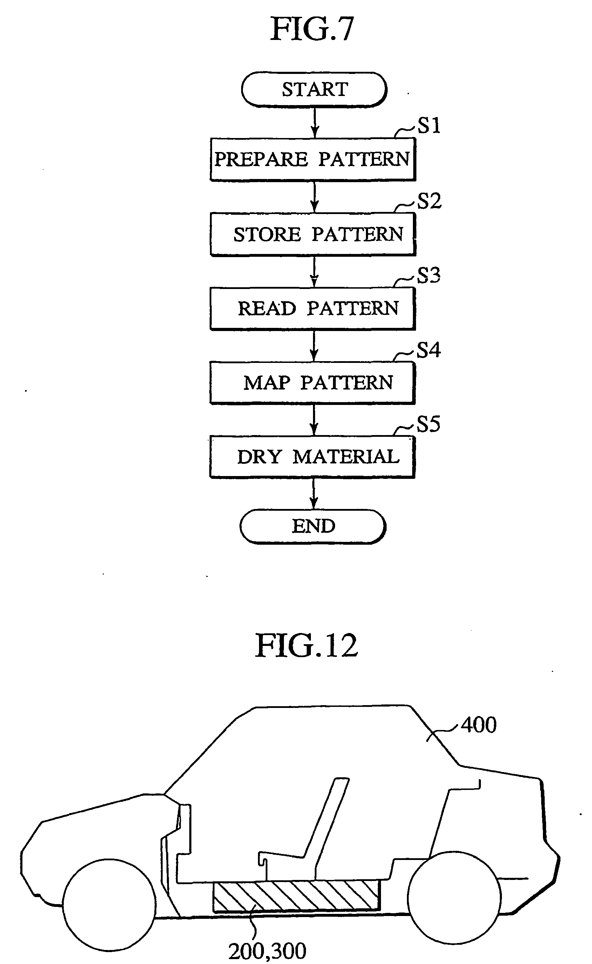

FIG. 7 shows a sequence of steps in a fabrication of a secondary cell electrode.

At a step S1, a necessary number of deposition patterns are prepared at the computer 100.

At a step S2, the deposition patterns are stored in the memory 106.

At a step S3, for current use in the fabrication, a corresponding pattern is read from the memory 106.

At a step S4, the read pattern is processed by the mapping operator 101, so that a layer of an active material is deposited in a mapped pattern on the collector 110.

At a step S5, the collector 110 is carried into the drying furnace, where the layer of deposited active material is heated and dried by the heater 112.

In the case of a secondary cell electrode to be fabricated as a bipolar electrode with a positive electrode layer formed on one side of the collector 110 and a negative electrode layer formed on the other side, the sequence of steps described are repeated two times, one for forming the positive electrode layer and the other for forming the negative electrode layer.

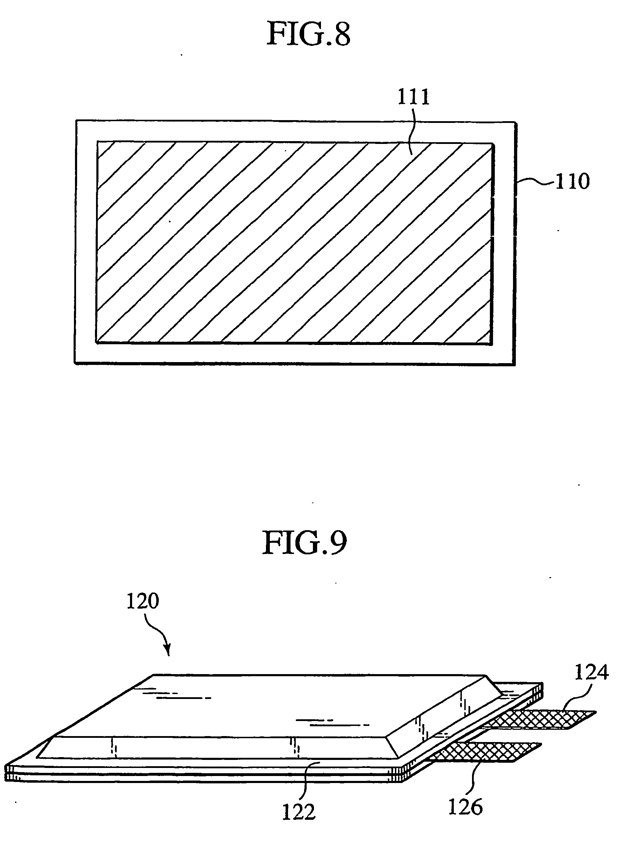

FIG. 8 shows, in plan, a secondary cell electrode as a bipolar electrode fabricated by repetition of the sequence of steps described.

A hatched planar area, one-size smaller than the collector 110, is an electrode layer 111 formed with a volume of active material injected on one side of the collector 100.

The bipolar electrode has positive and negative electrode layers formed on both sides of the collector 110. Assuming the electrode layer 111 of FIG 8 to be a positive, a negative electrode layer is formed on the opposite side.

FIG 9 shows a perspective view of a simplex secondary cell 120.

The secondary cell 120 internally accommodates a cell element composed of a plurality of secondary cell electrodes (that may be bipolar electrodes) fabricated in the described manner and laminated together with intervening electrolyte layers. The cell element is sheathed in a planer sheath 122 formed with a pair of polymer-metal composite laminate films sealed gas-tight. A positive electrode terminal 124 and a negative electrode terminal 126, internally connected to the cell element, are extended through an edge of the sheath 122, to be exposed for external connection.

Such secondary cells may be connected in series, parallel, or serial-parallel, and packaged as a complex cell or cell module.

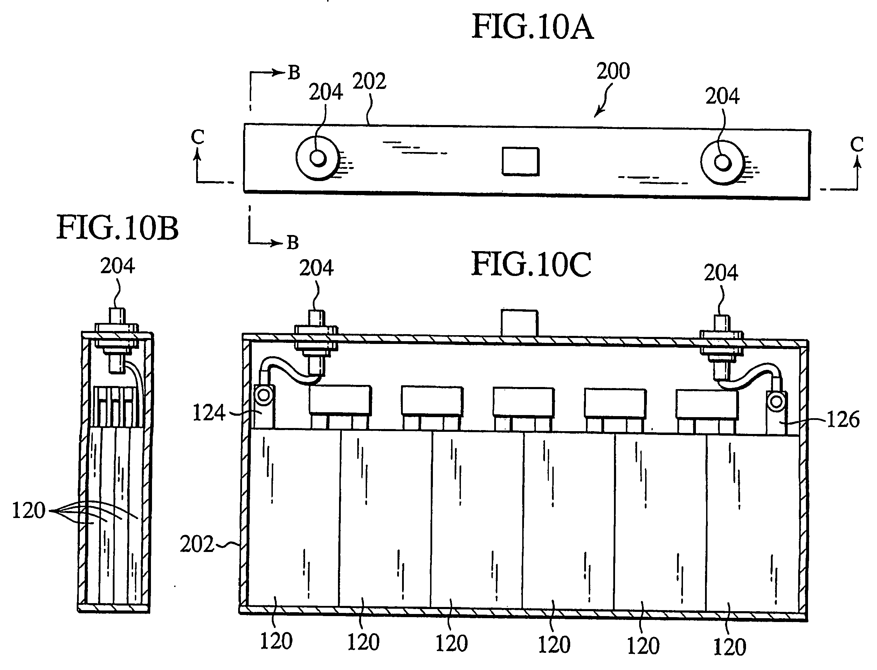

FIGS. 10A to 10C illustrate a complex cell 200 packaged in a rectangular elongate casing 202. This complex cell 200 is configured with a plurality of secondary. cells 120 connected inside the casing 202 in series, parallel, or serial-parallel, and has a pair of terminals 204 connected either to a positive electrode terminal 124 of an outermost secondary cell 120 and the other to a negative electrode terminal 126 of another outermost secondary cell 120, and extended outside the casing 204 for external connection to associated devices.

Such complex cells may be connected in series, parallel, or serial-parallel, and piled up to be assembled as a battery block.

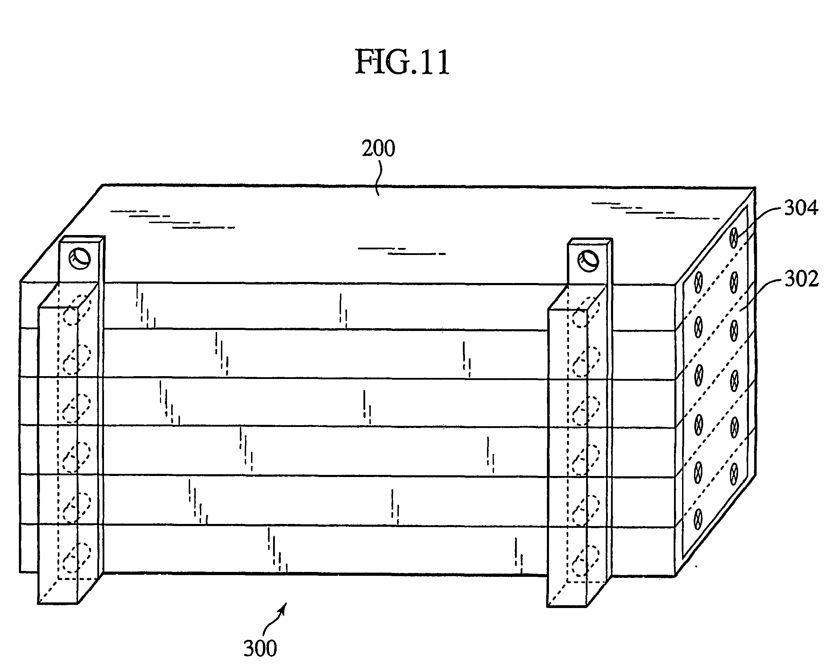

FIG. 11 is a perspective view of a battery block 300.

This battery block 300 is configured with a plurality of piled complex cells 200 connected in series, parallel, or serial-parallel and assembled together with electrical connecting end plates 302 fixed thereto by screws 304. The battery block 300 is protected against external impacts, by an elastic material applied in gaps and on outside surfaces including a bottom surface.

The number of secondary cells 120 constituting a complex cell 200 and that of complex cells 200 constituting a battery block 300, as well as their internal connections, are specified in accordance with a required capacity and power. The secondary cell is fabricated with an increased stability for use to a complex cell, and with a yet increased stability for use to a battery block. In the complex cell, as well as in the battery block, employed secondary cells are wholly kept stable with an increased durability to avoid adverse affects arising from deterioration of any secondary cell.

Such a complex cell or battery block may well be used in a vehicle.

FIG 12 shows, in side view, a typical vehicle 400 having a combination of complex cell 200 and battery block 300 installed therein.

The complex cell 200 and the battery block 300 installed in the vehicle 400 have matching electrical characteristics, such as power supply ratings, to required performances such as for power distribution and driving of the vehicle 400. The complex cell 200 and the battery block 300 have their secondary cells adapted for a conforming power supply service even after a long use, with a high durability. Further, they are configured to exhibit a stable performance against continued vibrations in the vehicle 400, without significant deterioration due to resonance.

### Part-2 Details of Embodiments

This part covers details of nonaqueous electrolyte electrodes according to the first embodiment, and those of gel electrolyte electrodes according to the second embodiment.

### 2.1 Details of first embodiment (nonaqueous electrolyte electrodes)

### 2.1.1 Configuration of nonaqueous electrolyte electrode

### 2.1.1a Nonaqueous electrolyte electrodes

The electrode active material layer may preferably be configured with, but not limited to, a number of laminated thin-film layers different from each other in solid concentration.

This configuration allows the electrode active material layer to be formed with a concentration gradient making the solid concentration increase along the thickness from the layer surface toward the collector.

The number of laminated thin film layers may be two or more, preferably three or more, or more preferably, five or more.

"Solid" in terms of solid concentration means a solid electrode material, such as an electrode active material, electrically conductive material, or binder, that may be contained in electrode active material layers.

Such solids may be adequately selected to form a concentration gradient with which the solid concentration increases along the thickness from the surface of electrode active material layer toward the collector.

For instance, with such a concentration gradient, the diffusion resistance of Li ion can be reduced, allowing for an effective electrode reaction even at high rate charge or discharge, as an advantage.

For a more advantageous effect, electrode active material, electrically conductive material, and binder may be distributed with such a concentration gradient to thereby reduce the contact resistance between collector and electrode, as well.

The electrode, positive or negative in polarity, may preferably have a thickness of electrode active material layer within a range of 1-100 µm, more preferably within a range of 5-50 µm.

The preferable thickness range of electrode active material layer excludes a thickness range under 1 µm where the formation of concentration gradient is very difficult, and a thickness range over 100 µm where the ion diffusion distance may be too great to ensure high output.

The collector may be typical or general, and may preferably be, for example, an aluminum foil, a SUS (stainless steel) foil, a clad material of nickel and aluminum, a clad material of copper and aluminum, a clad material of SUS and aluminum, or a combination of such metals to be plated.

Further, the collector may be a metal of which surface is covered with aluminum, or may be a pair of stuck metallic foils as circumstances require.

In use of a complex collector, the material of its positive-pole collector may preferably be an electrically conductive metal such as aluminum, aluminum alloy, SUS, or titanium, while aluminum is most preferable.

The material of negative-pole collector may preferably be an electrically conductive metal such as copper, nickel, silver, or SUS, while nickel and SUS are most preferable.

In the complex collector, the positive-pole and negative-pole collectors may well be electrically connected directly to each other, or via an electrically conductive intermediate layer made of a third material.

The positive-pole and negative-pole collectors of complex collector may have their thicknesses within a typical range of, for example, about 1-100 µm.

For collectors (with complex collectors inclusive), the thickness range of about 1-100µm is preferable from the viewpoint of making a thin cell.

### 2.1.1b Electrodes for positive pole

For use to a positive pole, the positive-pole oriented electrode active material layer (referred herein sometimes simply to "positive electrode layer") contains a positive electrode active material, and necessary additives including an electrically conductive material for enhanced electron conductivity, a binder, a lithium salt for enhanced ion conductivity, and an electrolyte.

The positive electrode active material may preferably be a lithium-transition metal complex oxide that is a complex oxide of a transition metal and lithium.

More specifically, the positive electrode active material may preferably be one of a family of Li-Co complex oxides such as LiCoO₂, a family of Li-Ni complex oxides such as LiNiO₂ a family of Li-Mn complex oxides such as spinel LiMn₂O₄, and a family of Li-Fe complex oxides such as LiFeO₂, or any of them having elements of its transition metal substituted with others.

These lithium transition metal complex oxides are excellent in reactivity and cycle durability, and relatively low in cost.

They are thus advantageously used for electrodes to provide a cell excellent in output characteristics.

The positive electrode active material may preferably be one of phosphorates or sulfates of lithium and transition metal, such as LiFePO₄; transition metal oxides or sulfides, such as V₂O₅, MnO₂, TiS₂, MoS₂, and MoO₃; and other applicable compounds such as PbO₂, AgO, and NiOOH.

The particle size of positive active material may preferably fall within a range of 0.1-50µm, or more preferably within a range of 0.1-20µm.

The preferable particle size range excludes a range under 0.1µm where the difficulty of fabrication may fail to provide a desirable charge or discharge characteristic, and a range over 50µm where one may suffer a difficulty in rubbing to the positive electrode active material.

The electrically conductive material may preferably be acetylene black, carbon black, graphite, or the like.

The particle size of electrically conductive material may preferably fall within a range of 0.1-50, or more preferably within a range of 1-30µm.

The preferable particle size range of electrically conductive material excludes a range under 0.1 µm where the quantity of conductive material needs to be increased for necessary conduction of electrons, and a range over 50µm where one may suffer a difficulty in rubbing to the positive electrode active material.

The binder may be, but not limited to, poly vinylidene fluoride (PVDF), SBR, polyimide, or the like.

The lithium salt may be one of, but not limited to, BETI (lithium bis (par fluoro ethylene sulfonyl imide)), Li(C₂F₅SO₂)₂N, LiBF₄, LiPF₆, LiN(SO₂CF₃)₂, LiN(SO₂C₂F₅)₂, and LiBOB (lithium bis oxide borate), or one of their mixtures.

The electrolyte is nonaqueous to provide a necessary concentration gradient. The nonaqueous electrolyte may preferably be a full-solid electrolyte composed of electrolytic high polymer and support salt such as a lithium salt, or a high polymer gel electrlyte composed of electrolytic high polymer and an electrolytic solution held therein.

As the electrolyte is nonaqueous, the positive electrode layer may preferably contain nonaqueous electrolyte.

With the nonaqueous electrolyte filling gaps between particles of positive electrode active material, the ion transfer in positive electrode layer is smoothed, allowing for an entire cell to have an enhanced output.

If the electrolyte is high polymer gel or has a separator with soaked electrolytic solution, the positive electrode layer may contain no electrolyte, subject to a known binder binding particles of positive electrode active material.

The full-solid electrolytic high polymer may be, but not limited to, polyoxyethylene (PEO), polypropylene oxide (PPO), or their copolymers. Such polyalkylene oxide polymers well dissolve lithium salts such as BETI, LiBF₄, LiPF₆, LiN(SO₂CF₃)₂, and LiN(SO₂C₂F₅)₂.

They form a cross-linking structure, thereby exhibiting an excellent mechanical strength.

According to the embodiment, high polymer solid electrolyte is contained in at least either positive or negative electrode active material layer.

However, it may preferably be contained in both of them for an enhanced performance of bipolar cell.

The high polymer gel electrolyte may be a full-solid electrolyte-oriented ion-conductive high polymer containing an electrolytic solution, or a lithium ion-nonconductive host polymer having a similar electrolytic solution held in its frame.

The electrolytic solution (electrolyte salt and plasticizer) to be contained in high polymer gel electrolyte may be a typical one for lithium ion cells, and may be, but not limited to, such one that contains at least one kind of lithium salt (electrolyte support salt) selected from among inorganic acid anion salts such as LiBOB (lithium bis oxide borate), LiPF₆, LiBF₄, LiClO₄, LiAsF6, LiTaF₆, LiAlCl₄, and O₂B₁₀Cl₁₀, and organic acid anion salts such as LiCF₃SO₃, Li(CF₃SO₂)₂N, and Li(C₂F₅SO₂)₂N, in an organic solvent (plasticizer) such an as aprotic solvent, using at least one kind, or having mixed two or more kinds, selected from among cyclic carbonates such as propylene carbonate (PC), and ethylene carbonate (EC), chain carbonates such as dimethyl carbonate, methylethyl carbonate, and diethylcarbonate, ethers such as tetrahydrofuran, 2-methyltetrahydrofuran, 1,4-dioxane, 1,2-dimethoxyethane, and 1,2-dibutoxyethane, lactones such as γ-butyrolactone, nitriles such as acetonitrile, esters such as methyl propionate, amides such as dimethyl formamide, methyl acetates, and methyl formates.

The lithium ion-nonconductive host polymer to be contained in high polymer gel electrolyte may be, but not limited to, a monomer forming a gelled polymer such as poly vinylidene fluoride (PVDF), polyvinyl chloride (PVC), polyacrylonitrile (PAN), or polymethyl methacrylates (PMMA).

It is noted that PAN, PMMA and the like are exemplified as lithium ion-nonconductive host polymers to be contained in high polymer gel electrolyte, while they are little ion-conductive and may belong to a group of ion-conductive high polymers for electrolyte use.

The ratio of host polymer and electrolytic solution in high polymer gel electrolyte may range from 2:98 to 90:10 in mass ratio, depending on the objective etc.

Oozing electrolyte from an outer periphery of electrode active material layer may thus also be effectively sealed by provision of an insulation layer or insulating part.

The mass ratio of host polymer and electrolytic solution in high polymer gel electrolyte may thus be determined, with a higher priority to cell performance.

For the positive electrode layer containing positive electrode active material, electrically conductive material, binder, nonaqueous electrolyte (host polymer, electrolytic solution, etc.), lithium salts, and the like, proportions of those ingredients may be determined in consideration of the objective of cell (output, energy, etc. to be prioritized) and the conductivity of Li ion.

For example, if the proportion of nonaqueous electrolyte is smaller than required in the positive electrode layer, the conduction resistance of Li ion as well as the diffusion resistance becomes great, so that the cell has a reduced performance.

To the contrary, if the proportion of nonaqueous electrolyte is greater than necessary in the positive electrode layer, the cell has a reduced energy density.

The amount of nonaqueous electrolyte is determined in consideration of such factors, to meet the objective.

The description is omitted here as to thickness of the positive electrode layer as above-mentioned.

The positive electrode layer has a preferable thickness as described (see sec. 2.1.1a).

### 2.1.1c Electrodes for negative pole

For use to a negative pole, the negative-pole oriented electrode active material layer (referred herein sometimes simply to "negative electrode layer") contains a negative electrode active material, and necessary additives including an electrically conductive material for enhanced electron conductivity, a binder, a lithium salt for enhanced ion conductivity, and an electrolyte. The additives are similar to those of positive electrode layer (see sec. 2.1.1b).

The negative electrode active material may preferably be one of various kinds of graphites such as natural or artificial graphites, for example, fibrous graphite, scale graphite, and spheroidal graphite, various kinds of lithium alloys, and the like.

More specifically, the positive electrode active material may preferably be one of carbon, graphite, and lithium-transition metal complex oxide, while carbon and lithium-transition metal complex oxide are better.

Lithium transition metal complex oxide and carbon are excellent in reactivity and cycle durability, and relatively low in cost.

They are thus advantageously used for electrodes to provide a cell excellent in output characteristics.

The lithium transition metal complex oxide may be a lithium-titanium complex oxide such as Li₄Ti₅O₁₂, for example.

The carbon may be graphite, hard carbon, or soft carbon, for example.

The negative electrode layer has a preferable thickness as described (see sec. 2.1.1a).

### 2.1.2 Fabrication of nonaqueous electrolyte electrodes

### 2.1.2a Method of fabrication

According to the first embodiment, a nonaqueous electrolyte electrode is fabricated by a method including: a step (a) of changing a quantity of a solid material to be added to compose an electrode active material layer, thereby preparing a plurality of kinds of electrode slurry different in density and in a concentration of the solid material; and a step (b) of coating a collector with the plurality of kinds of electrode slurry so that the concentration of the solid material is sequentially increased from a surface of the electrode active material layer toward the collector, thereby laminating a plurality of thin-film layers different in concentration of the solid material.

This method can provide a nonaqueous electrolyte electrode according to the first embodiment, in which a plurality of thin-film layers different in density and in a concentration of a solid material are laminated to have a concentration gradient with which the concentration of the solid material is increased from a surface of an electrode active layer toward a collector.

### 2.1.2b Fabrication of electrodes for positive pole

For fabrication of a positive-pole oriented electrode, at the step (a) of the method described (see sec. 2.1.2a), the plurality of kinds of electrode slurry are each respectively prepared as a corresponding solution containing a positive electrode active material (referred herein simply to "positive electrode slurry", or sometimes to "positive electrode ink" in this embodiment).

This slurry may contain an electrically conductive material, a binder, an electrolyte-oriented high polymer as a raw material of nonaqueous electrolyte, an electrolyte support salt, an initiator, a solvent, and the like, as necessary.

For instance, the positive electrode slurry may be prepared by adding additives such as an electrically conductive material, a binder, and an electrolyte support salt to a solvent containing a positive electrode active material, and by stirring a resultant solution for a homogeneous mixing or such.

Likewise, a plurality of kinds of slurry are prepared, having solid materials such as a positive electrode active material, an electrically conductive material, and a binder changed in quantities of addition, as necessary, to provide a desirable concentration gradient.

For the positive electrode active material, electric conductivity, binder, electrolyte-oriented high polymer, and electrolyte support salt, refer to the foregoing description.

For viscosity control of positive electrode slurry, an adequate solvent such as n-methyl-2-pyrrolidone (NMP) or n-pyrrolidone may be selected in accordance with the kind of slurry.

An identical solvent may preferably be used for the respective kinds of positive electrode slurry.

The particle size of positive electrode active material may be set under 50µm in consideration of the film thickness of positive electrode layer, preferably within a range of 0.1- 50µm, or more preferably within a range of 1-20µm.

The initiator is properly selected in accordance with the compounds to be polymerized and an employed method of polymerization such as for thermal polymerization, photopolymerization, radiation polymerization, or electron beam polymerization.

For instance, the initiator may be, but not limited to, benzyldimetilketarl as a photoinitiator, or azobis isobutyronitrile as a thermal initiator.

For positive electrode active material, electrolyte support salt, and electric conduction assisting agent, the quantity of addition may be controlled in accordance with the objective of cell, etc.

The addition quantity of initiator depends on the number of crosslinkable functional groups in an electrolyte-oriented polymer employed for the nonaqueous electrolyte.

Typically, it falls within a range of about 0.01-1% in mass ratio to the electrolyte-oriented polymer.

At the step (b) in the method of fabrication described (see sec. 2.1.2a), the "coating a collector with the plurality of kinds of positive electrode slurry" may preferably be done by one of a screen printing method, a spray coating method, an electrostatic spray coating method, and an ink jet method.

The ink jet method is a method of spreading droplets of positive electrode slurry from ink jet nozzles on a collector, enabling target regions on the collector to be coated by a desirable uniform thin-film thickness of slurry, thus allowing the positive electrode slurry to be spread in optimum pattern. This is preferable.

Spreading positive electrode slurry "in optimum pattern" in a coating by the ink jet method means spreading the positive electrode slurry on a collector so that a solid material has a sequentially increased concentration.

The ink jet method employs a known drop-on-demand system.

The system may preferably be a piezo type in which a ceramic piezo element deforms with a voltage imposed thereon to deliver liquid.

In the piezo type, electrode materials contained in the positive electrode slurry (i.e. positive electrode ink) are excellent in thermal stability so that the quantity of ink to be spread is variable.

A piezo type ink jet head is adapted to deliver various kinds of liquid relatively high of viscosity with an ensured stability and precision better than other types, within an effective delivery range up to a viscosity of 10Pa·s(100cp).

A typical piezo type ink jet head is configured with an ink chamber for storing a positive electrode ink in the head, and an ink introducing part communicating with the ink chamber via an ink channel.

This ink jet head has a multiplicity of nozzles arrayed in a lower portion thereof, an array of piezoelectric elements disposed in an upper portion thereof, and a driver for driving piezoelectric elements to deliver liquid of the ink chamber, to be spread from associated nozzles.

Such a structure of ink jet head is a mere illustration, and not restrictive. An ink jet head available on the market may well be used.

Metallic foils to be coated with positive electrode ink may suffer a difficulty in their feed to an ink jet printer. Such foils may be stuck on sheets of quality paper, to be fed to the ink jet printer.

A plastic-make ink introducing part may be partially dissolved by a solvent of positive electrode ink.

The ink introducing part may preferably be metallic.

The viscosity of positive electrode slurry may preferably fall within a range of 0.1-100cP at 25°C, more preferably, within a range of 0.5-10cP, or yet more preferably, within a range of 1-3cP

The preferable viscosity range may exclude a range under 0.1cP where the positive electrode ink may suffer a difficulty in liquid quantity control in use as an ink for ink jet, and a range exceeding 100cP where the positive electrode ink may suffer a difficulty in passing nozzles in the use as an ink for ink jet.

The viscosity may well be measured by an L-type viscosimeter, a rotary viscosimeter, etc.

In use of a high-viscous positive electrode slurry as an ink for ink jet, the positive electrode slurry coated on a collector may have a stroke, plot or thin spot.

In such a case, the positive electrode slurry may preferably be heated to an adequate viscosity, with a heater provided of the ink chamber.

A low-viscous positive electrode slurry may have a positive electrode active material deposited in the ink chamber, which may well be stirred by rotary blades or the like.

The method of spreading a positive electrode slurry by an ink jet system may preferably be one of, but not limited to: a method (1) of providing a single ink jet head, and independently controlling liquid delivery actions of a plurality of its minute-diameter nozzles, thereby spreading droplets on a collector surface in optimum pattern; and a method (2) of providing a plurality of ink jet heads, and independently controlling their liquid delivery actions, thereby spreading droplets on a collector surface in optimum pattern.

These methods enable forming a desirable optimum pattern in a short time.

In the methods (1) and (2) described, the "independently controlling liquid delivery actions" may include, but may not be limited to, for instance, connecting an ink jet printer using the ink jet head(s) to a computer available in the market or the like, preparing a desirable pattern by software, such as Power Points (by Microsoft Corporation) or Auto CAD (by AutoDesk Corporation), read therein, and executing control with electric signals from such software.

In the method (1), the "spreading droplets on a collector surface in optimum pattern" may preferably include steps of independently controlling respective liquid delivery actions of the minute-diameter nozzles, thereby spreading a kind of positive electrode slurry on the collector surface to form a thin-film layer, and thereafter, repeating spreading a kind of positive electrode slurry smaller in concentration of solid material, each time to form a thin-film layer, thus laminating a plurality of coats of positive electrode slurry different in concentration, to achieve a desirable concentration gradient.

In the method (2), the "spreading droplets on a collector surface in optimum pattern" may preferably include a step of independently controlling the respective ink jet heads, thereby spreading mixed droplets of a plurality of kinds of positive electrode slurry different in concentration of solid material, thereby laminating a plurality of thin-film layers having a desirable concentration gradient.

The particle size of droplets of positive electrode slurry to be delivered from ink jet head may preferably set within a range of 1-500p1, or more preferably within a range of 1-100p1, in consideration of the film thickness of positive electrode layer.

The thickness of thin film to be spread may preferably fall within a range of 1-100µm, or more preferably within a range of 5-50µm, as the thickness is adjustable to achieve a desirable thickness of electrode active material layer.

The preferable thickness range excludes a range under 1µm where the capacity of cell may be extremely reduced, and a range over 100µm where an elongated diffusion distance of Li ion in the electrode may render the resistance large.

The plurality of thin-film layers to be laminated in a positive electrode active material layer may have their thicknesses respectively determined adequately to achieve a desirable electrode characteristic, without the need to be even.

Spread positive electrode slurry may well be dried in a typical atmosphere, preferably in a vacuum atmosphere within a temperature range of 20-200°C for a period within a range of 1 minute - 8 hours, or more preferably, within a temperature range of 80-150°C for a period within a range of 3 minutes -1 hour.

These conditions are not restrictive, so that the drying condition may be determined in a suitable manner depending on, for instance, the quantity of solvent in the spread positive electrode slurry.

If an employed positive electrode slurry is free of nonaqueous electrolyte (full-solid electrolyte-oriented high polymer or high-polymer gel electrolyte), dried positive electrode slurry may be soaked with later-described electrolyte slurry.

The soaking may preferably be made by, but not limited to, an applicator or coater configured for supply of minute quantity.

The method of porimerizing electrolyte high polymer contained in positive electrode slurry may well be properly determined in accordance with an employed initiator, and in use of a photoinitiator for example, may be developed even in atmospheric air, but preferably, in an inactive atmosphere such as argon or nitrogen, or more preferably, in a vacuum atmosphere, within a temperature range of 0-150°C, still preferably, within a temperature range of 20-40°C, for a period within a range of 1 minute - 8 hours, yet preferably, within a range of 5 minutes -1 hour, subject to an irradiation by ultraviolet rays.

According to the embodiment, the positive-pole electrode may be fabricated otherwise.

The positive electrode slurry may be prepared with, for instance, electrolyte-oriented high polymer and initiator or the like initially added thereto.

A plurality of coats of positive electrode slurry may well be laminated on a substrate such as an electrolyte layer (electrolyte film) or a separator soaked with electrolyte, preferably through a step of sequentially spreading a plurality of kinds of positive electrode slurry, starting from that kind which is smallest in concentration of solid material, for lamination to achieve a desirable concentration gradient.

Thereafter, a collector may be joined on a lamination of dried and polymerized coats of positive electrode slurry to fabricate a positive-pole electrode, as another applicable method.

### 2.1.2c Fabrication of electrodes for negative pole

For fabrication of a negative-pole oriented electrode, at the step (a) of the method described (see sec. 2.1.2a), the plurality of kinds of electrode slurry are each respectively prepared as a corresponding solution containing a negative electrode active material (referred herein simply to "negative electrode slurry", or sometimes to "negative electrode ink" in this embodiment).

This slurry may contain an electrically conductive material, a binder, an electrolyte-oriented high polymer as a raw material of nonaqueous electrolyte, an electrolyte support salt, an initiator, a solvent, and the like, as necessary.

For negative electrode active material, electrically conductive material, binder, electrolyte-oriented high polymer, electrolyte support salt, initiator, solvent, and the like, their kinds as well as quantities of additions are referred to in the foregoing description.

The particle size of negative electrode active material may preferably be set within a range under 50µm, or more preferably, within a range of 0.1-20µm, as such particles are spread in the negative electrode active material layer.

At the step (b) in the method of fabrication described (see sec. 2.1.2a), the "coating a collector with the plurality of kinds of negative electrode slurry" may preferably be done in a similar manner to the positive electrode slurry.

It is noted that in the first embodiment the negative-pole electrode as well as the positive-pole electrode may preferably be fabricated at temperatures under a dew point of -20°C inclusive, to avoid inclusion such as of moisture into the electrode.

### 2.1.3 Applications of nonaqueous electrolyte electrodes

### 2.1.3a Nonaqueous electrolyte cell

The first embodiment provides various nonaqueous electrolyte electrodes that can withstand high rate charge or discharge, which are employed to obtain a nonaqueous electrolyte cell excellent in performance.

For positive-pole and negative-pole electrodes of the nonaqueous electrolyte cell, refer to the foregoing description.

The nonaqueous electrolyte cell has its electrolyte layers, any of which may be a nonaqueous electrolyte layer configured with full-solid electrolyte-oriented high polymer or high-polymer gel electrolyte.

For formation of such electrolyte layer, an adequate electrolyte slurry (referred sometimes to "electrolyte ink" in this embodiment) is prepared, containing electrolyte-oriented high polymer and lithium salt, as well as initiator, solvent, etc. These ingredients may be properly prepared to obtain a desirable nonaqueous electrolyte layer.

The full-solid electrolyte-oriented high polymer may be formed as a compound of polymer and lithium salt by, but not limited to, polymerizing a monomer from a mixture of high polymer for electrolyte and lithium salt.

The full-solid electrolyte-oriented high polymer may be formed by soaking a gel electrolyte or full-solid electrolyte-oriented high polymer to a separator.

The electrolyte-oriented high polymer, lithium salt, initiator, and solvent, are similar to those described.

The high-polymer gel electrolyte may be formed by, but not limited to, polymerizing a monomer by using an electrolytic solution that contains an electrolyte-oriented high polymer to form a gelled polymer.

The electrolyte-oriented high polymer and electrolytic solution, as well as their proportions, are similar to those described.

However, the quantity of electrolytic solution contained in the high-polymer gel electrolyte may preferably be held substantially even therein, or reduced from the center in an inclined manner toward the periphery.

The former allows reaction over a wider region, as an advantage. The latter has, at the periphery, an enhanced sealability against electrolytic solution of full-solid electrolyte-oriented high polymer, as an advantage.

The smaller in thickness the nonaqueous electrolyte layer is, the better performance it has in reduction of internal resistance.

The thickness of nonaqueous electrolyte layer may fall within a mage of 0.1-100µm, or preferably within a range of 5-20µm.

This thickness refers to the thickness of nonaqueous electrolyte layer provided between positive-pole and negative-pole electrodes.

Therefore, in some electrolyte layer fabrication method, the nonaqueous electrolyte layer may be formed by joining, such as by sticking together, a plurality of electrolyte films identical or different in thickness.

Even in such a case, the thickness of nonaqueous electrolyte layer refers to that formed by joining the electrolyte films.

The nonaqueous electrolyte cell according to this embodiment may be fabricated by, but not limited to, steps of forming a positive electrode active material layer on a collector in a described manner, laminating thereon a nonaqueous electrolyte layer and a negative electrode electrolyte layer to provide a lamination by an ink jet system, holding this between collectors or the like, and sealing a resultant laminate with a cell case so that simply positive-pole and negative-pole electrode leads extend outside the cell.

The nonaqueous electrolyte layer, positive-pole electrode, and negative-pole electrode have their nonaqueous electrolyte, as necessary, which may be identical or different.

Electrolyte slurry may preferably be coated by, but not limited to, using a piezo type ink jet system, which allows the nonaqueous electrolyte layer to be formed very thin.

The viscosity of electrolyte slurry may be similar to that of positive electrode slurry.

The size of spread electrolyte layer may preferably be a little greater than that of an electrode forming portion.

Spread electrolyte slurry may be dried and polymerized in a similar manner to the positive electrode slurry.

Polymerized electrolyte slurry may be used to form a negative electrode active material layer in a similar manner to the described manner, to provide a desirable concentration gradient.

For a nonaqueous electrolyte layer to be coated with different kinds of negative electrode slurry spread thereon as thin-films layers, the lamination may preferably be started from that kind of negative electrode slurry which has a lower solid concentration, and after a repeated lamination of a plurality of thin-film layers, ended with that kind of negative electrode slurry which has a higher solid concentration.

A thus prepared laminate may be held between separate collectors or the like, and sealed with a cell case so that simply leads of positive-pole and negative-pole electrodes extend outside the cell.

The cell case may be configured to prevent external impact or environmental deterioration in use.

For example, a sheath made of a laminate material having laminated high polymer films and metallic foils may be thermally fusion-bonded to be joined along the periphery, or configured in an envelope form to be thermally fusion-bonded to be closed tight at the opening, so that lead terminals of positive-pole and negative-pole electrodes can be drawn out from the fusion-bonded part.

The number of lead draw-out parts may be one or more for each lead terminal.

The material of cell case may be else than described, for instance, plastic, metal, rubber, or the like, or combination of them. The configuration may also be film-shape, planer, or box-shape.

The cell case may be provided with a connector for connection between a cell inner end thereof connected to a collector, and a cell outer end thereof connected to a lead terminal to take out a current therefrom.

According to this embodiment, the gel electrolyte cell may be a lithium ion secondary cell, sodium ion secondary cell, potassium ion secondary cell, magnesium ion secondary cell, or calcium ion secondary cell.

The lithium ion secondary cell is preferable from a practical viewpoint.

The nonaqueous electrolyte cell using electrodes according to the embodiment may be categorized by configuration or structure into, but not limited to, a (planer) laminate cell, a (cylindrical) rolled cell, or any known form or type else.

As advantages, the nonaqueous electrolyte cell has no liquid to leak, and is free from the problem of short-circuit by liquid, thus having high reliability, simple in structure, and excellent in output characteristic.

The nonaqueous electrolyte cell may be improved in output characteristics, by using a lithium-transition metal complex oxide as the positive electrode active material, which is a low-cost material excellent in reactivity and cycle durability, as advantage.

The nonaqueous electrolyte cell may have an advantage in cost and workability, by employing the (planer) laminate structure which can provide an ensured long reliability by a simple sealing technique such as a thermal pressure bonding.

### 2.1.3b Bipolar cell

From the viewpoint of internal electrical connection (electrode structure), the nonaqueous electrolyte cell according to this embodiment may be categorized into a bipolar cell (an internally serial-connected type) or non-bipolar cell (an internally parallel-connected type).

The bipolar cell has a relatively high voltage as a simplex cell, and allows fabrication of a cell excellent in capacity and output characteristics.

The nonaqueous electrolyte cell according to this embodiment may preferably be fabricated as an excellent bipolar lithium ion secondary cell (referred herein sometimes simply to "bipolar cell").

### 2.1.3c Complex cell

According to this embodiment, a complex cell may be formed with a plurality of nonaqueous electrolyte cells, or preferably, with a plurality of bipolar cells.

In other words, two or more bipolar cells according to the embodiment may be connected in serial-parallel to provide a complex cell as a high-capacity, high-output cell or battery module, which allows objective-dependent various demands for cell capacity and output to be coped with at relatively low costs.

### 2.1.3d Vehicle

According to this embodiment, the nonaqueous electrolyte cell has various advantages, and is preferable in application to vehicles, in particular as a driving power supply for vehicles severe of demand for energy and output density, such as an electric vehicle or hybrid electric vehicle. It can provide an electric vehicle or hybrid electric vehicle excellent in fuel consumption and traveling performance.

Such an electric vehicle or hybrid electric vehicle may preferably have a set of complex cells mounted as a driving power supply under, but not limited to, a central seat of the vehicle, with an advantageous wide space left for the passenger's room or trunk room.

The set of complex cells may be installed under a vehicular floor, or in a trunk room, engine room, roof space, bonnet hood, etc.

The set of cells may preferably comprise complex cells, bipolar cells, or combination thereof, as suitable for the objective.

The cell set of bipolar and/or complex cells may preferably be mounted in, but not limited to, an electric vehicle or hybrid electric vehicle.

### 2.2 Details of second embodiment (gel electrolyte electrodes)

### 2.2.1 Consecration of gel electrolyte electrode

### 2.2.1a Gel electrolyte electrode

The electrode active material layer having such a concentration gradient may preferably be configured with, but not limited to, a number of laminated thin-film layers different from each other in density as well as in electrolyte salt concentration. The number of laminated thin-film layers may be two or more, and more preferably three or more. When the number of laminated thin-film layers is less than two, it becomes possible to perform rapid discharge at an increased ion concentration, for example, but the capacity at a normal rate is lowered. On the contrary, when the ion concentration is decreased, the capacity at a normal rate is increased, but the rapid discharge is difficult.

The electrolyte salt to be used in the electrode of this second embodiment may be, but not limited to, BETI (lithium bis (perfluoro ethylene sulfonyl imide), i.e., Li(C₂F₅SO₂)₂N), LiBF₄, LiPF₆, LiN(SO₂CF₃)₂, LiN(SO₂C₂F₅)₂, and LiBOB (lithium bis oxide borate), or mixtures thereof.

components of the electrode will be described below.

The collector may be typical or general, and may preferably be, for example, an aluminum foil, a SUS (stainless steel) foil, a clad material of nickel and aluminum, a clad material of copper and aluminum, a clad material of SUS and aluminum, or a combination of such metals to be plated.

Further, the collector may be a metal of which surface is covered with aluminum, or may be a pair of stuck metallic foils, as circumstances require.

In use of a complex collector, the material of its positive-pole collector may preferably be an electrically conductive metal such as aluminum, aluminum alloy, SUS, or titanium, while aluminum is most preferable.

The material of negative-pole collector may preferably be an electrically conductive metal such as copper, nickel, silver, or SUS, while nickel and SUS are most preferable.

In the complex collector, the positive-pole and negative-pole collectors may well be electrically connected directly to each other, or via an electrically conductive intermediate layer made of a third material.

The positive-pole and negative-pole collectors of complex collector may have their thicknesses within a typical range of, for example, about 1-100µm.

For collectors (with complex collectors inclusive), the thickness range of about 1-100µm is preferable from the viewpoint of making a thin cell.

### 2.2.1b Electrodes for positive pole

For use to a positive pole, the positive-pole oriented electrode active material layer (referred herein sometimes simply to "positive electrode layer") contains a positive electrode active material and an electrolyte salt for enhanced ion conductivity, and necessary additives including an electrically conductive material for enhanced electron conductivity, a binder, and an electrolyte.

More specifically, the positive electrode active material may preferably be one of a family of Li-Co complex oxides such as LiCoO₂, a family of Li-Ni complex oxides such as LiNiO₂, a family of Li-Mn complex oxides such as spinel LiMn₂O₄, and a family of Li-Fe complex oxides such as LiFeO₂ or any of them having elements of its transition metal substituted with others.

These lithium transition metal complex oxides are excellent in reactivity and cycle durability, and relatively low in cost.

They are thus advantageously used for electrodes to provide a cell excellent in output characteristics.

The positive electrode active material may preferably be one of phosphates or sulfates of lithium and transition metal, such as LiFePO₄; transition metal oxides or sulfides, such as V₂O₅, MnO₂, TiS₂, MoS₂, and MoO₃; and other applicable compounds such as PbO₂, AgO, and NiOOH.

The particle size of positive active material may preferably fall within a range of 0.1-50µm, or more preferably within a range of 1-20µm.

The preferable particle size range excludes a range under 0.1µm where the difficulty of fabrication may fail to provide a desirable charge or discharge characteristic, and a range over 50µm where one may suffer a difficulty in rubbing to the positive electrode active material.

The electrically conductive material may preferably be acetylene black, carbon black, graphite, or the like.

The binder may be of, but not limited to, poly vinylidene fluoride (PVDF), SBR, polyimide, or the like.

For the electrolyte salt, refer to the foregoing description.

In case of using, as the electrolyte layer, a separator impregnated with gel electrolyte or electrolytic solution, the positive electrode layer needs not to contain electrolyte, but needs to contain a known binder for mutually binding particles of the positive electrode active material.

The electrolyte may preferably be a gel electrolyte for an enhanced Li-ion conductivity. The gel electrolyte, which typically contains an electrolytic solution in an ion-conductive full-solid high polymer electrolyte, may be such one that additionally has a similar electrolytic solution held in a frame of a lithium ion-nonconductive electrolytic high polymer (host polymer).

The electrolytic solution (electrolyte salt and plasticizer) to be contained in gel electrolyte may be a typical one for lithium ion cells, and may be, but not limited to, such one that contains at least one kind of electrolyte salt selected from among inorganic acid anion salts such as LiBOB (lithium bis oxide borate), LiPF₆, LiBF₄, LiClO₄, LiAsF₆, LiTaF₆, LiAlCl₄, and Li₂B₁₀Cl₁₀, and organic acid anion salts such as LiCF₃SO₃, Li(CF₃SO₂)₂N, and Li(C₂F₅SO₂)₂N, in an organic solvent (plasticizer) such an as aprotic solvent, using at least one kind, or having mixed two or more kinds, selected from among cyclic carbonates such as propylene carbonate (PC), and ethylene carbonate (EC), chain carbonates such as dimethyl carbonate, methylethyl carbonate, and diethylcarbonate, ethers such as tetrahydrofuran, 2-methyltetrahydrofuran, 1,4-dioxane, 1,2-dimethoxyethane, and 1,2-dibutoxyethane, lactones such as γ-butyrolactone, nitriles such as acetonitrile, esters such as methyl propionate, amides such as dimethyl formamide, methyl acetates, and methyl formates.

The lithium ion-nonconductive host polymer to be contained in gel electrolyte may be, but not limited to, a monomer forming a gelled polymer such as poly vinylidene fluoride (PVDF), polyvinyl chloride (PVC), polyacrylonitrile (PAN), or polymethyl methacrylates (PMMA).

It is noted that PAN, PMMA and the like are exemplified as lithium ion-nonconductive host polymers to be contained in gel electrolyte, while they are little ion-conductive and may belong to a group of ion-conductive high polymers.

The ratio of electrolytic high polymer and electrolytic solution in gel electrolyte may range from 2:98 to 90:10 in mass ratio, depending on the objective etc.

Oozing electrolyte from an outer periphery of electrode active material layer may thus also be effectively sealed by provision of an insulation layer or insulating part.

The mass ratio of electrolytic high polymer and electrolytic solution in gel electrolyte may thus be determined, with a higher priority to cell performance.

### 2.2.1c Electrodes for negative poles

For use to a negative pole, the negative-pole oriented electrode active material layer (referred herein sometimes simply to "negative electrode layer") contains a negative electrode active material and electrolyte salt for enhanced ion conductivity, as well as necessary additives including an electrically conductive material for enhanced electron conductivity, a binder, an electrolyte, and a film forming material for forming a film. Other additives else than the negative electrode active material and film forming material may be similar to those of positive electrode layer (see sec. 2.2.1b).

The negative electrode active material may preferably be one of various kinds of graphites such as natural or artificial graphites, for example, fibrous graphite, scale graphite, and spherical graphite, various kinds of lithium alloys, and the like.

More specifically, the positive electrode active material may preferably be one of carbon, graphite, and lithium-transition metal complex oxide, while carbon and lithium-transition metal complex oxide are better.

Lithium transition metal complex oxide and carbon are excellent in reactivity and cycle durability, and relatively low in cost.

They are thus advantageously used for electrodes to provide a cell excellent in output characteristics.

The lithium transition metal complex oxide may be a lithium-titanium complex oxide such as Li₄Ti₅O₁₂, for example.

The carbon may be graphite, hard carbon, or soft carbon, for example.

The film forming material means a variety of additives for forming decomposition-product film (solid electrolyte interface: SEI film) by reductive decomposition of the gel electrolyte, on the negative electrode surface. The film to be formed is characteristically required to be thin, to have a higher ion conductivity, and to restrict infiltration of electrolyte into the electrode.

The film forming raw material may thus be any of succinic anhydride, 1,6-dioxaspiro[4,4]nonane-2,7-dione, 1,4-dioxaspiro[4,5]decane-2-one, and the like; and besides, carbonates such as vinylene carbonate, trifluoropropylene carbonate, catechol carbonate; cyclic ethers such as 12-crown-4-ether; acid anhydrides such as glutaric anhydride; cyclic ketones such as cyclopentanone, cyclohexanone; sultones such as 1,3-propane sultone, 1,4-butane sultone; sulfur-containing compounds including thio-carbonate; and nitrogen-containing compounds including imides.

The film forming raw material may preferably be one of sulfur-containing compounds including sultones having an -OS(=O)₂- bond, and its concrete examples include 1,3-propane sultone, 1,4-butane sultone, 2,3-dimethyl butene sultone, 2-ethoxypentafluoro propane-1,2-sultone, dimethyl sulfate, diethyl sulfate, ethylmethyl sulfonate. Adoption of such a film forming raw material causes lithium-sulfur compound to intermix into the film of negative electrode surface, increases ion conductivity within the film, and smoothens the ion transport.

The electrode of this embodiment may be such one that has a density gradient developed with a concentration gradient of the film forming material from the electrode active material layer surface toward the collector, in the electrode active material layer on the collector. Also the film forming material act as a cause disturbing diffusion of Li ion at high rate charge or discharge. Thus, when the negative-electrode oriented active material layer is designed such that the concentration of the film forming material is increased along the thickness from the negative-electrode oriented active material layer surface toward the collector, the concentration of the film forming material at the negative-electrode oriented active material layer surface can be decreased to allow Li ion to be smoothly diffused.

Li ion can be smoothly diffused in the electrode having a concentration gradient of the film forming material, as compared with an electrode having a film forming material formed at a uniformly high concentration. Further, stability of negative electrode is enhanced in the electrode having a concentration gradient of the film forming material, as compared with an electrode having a film forming material formed at a uniforml low concentration.

The electrode of this embodiment preferably has concentration gradients of the electrolyte salt and film forming material along the thickness from the electrode active material layer surface toward the collector, preferably in the electrode active material layer on the collector, thereby enabling more excellent effect to be exhibited at high rate charge or discharge. The concentration gradients of electrolyte salt and film forming material may be appropriately determined to obtain a desirable electrode.

The electrode, positive or negative in polarity, may preferably have a thickness of electrode active material layer within a range of 1-100 µm, more preferably within a range of 5-50 µm.

The preferable thickness range of electrode active material layer excludes a thickness range under 1 µm where the formation of concentration gradient is very difficult, and a thickness range over 100 µm where the ion diffusion distance may be too great to ensure high output.

### 2.2.2 Fabrication of gel electrolyte electrodes

### 2.2.2a Method of fabrication

According to the second embodiment, a gel electrolyte electrode is fabricated by a method including: a step (a) of changing a quantity of an electrolyte salt to be added to compose an electrode active material layer, thereby preparing a plurality of kinds of electrode slurry different density as well as in a concentration of the electrolyte salt; and a step (b) of coating a collector with a sequence of the plurality of kinds of electrode slurry so that the electrode active material layer has a density gradient developed with a concentration gradient of the electrolyte salt from a surface of the electrode active material layer toward the collector, thereby laminating a plurality of thin-film layers different density as well as in the concentration of the electrolyte salt.

This method can provide the electrode according to the second embodiment, in which a plurality of thin-film layers different in concentration of an electrolyte salt are laminated to have a concentration gradient with which the electrolyte salt has a concentration gradient from a surface of an electrode active material layer toward a collector.

### 2.2.2b Fabrication of electrodes for positive pole

For fabrication of a positive-pole oriented electrode, at the step (a) of the method described (see sec. 2.2.2a), the plurality of kinds of electrode slurry are each respectively prepared as a corresponding solution containing a positive electrode active material (referred herein simply to "positive electrode slurry", or sometimes to "positive electrode ink" in this embodiment) and an electrolyte salt. This slurry may contain an electrically conductive material, a binder, an electrolyte-oriented high polymer as a raw material of gel electrolyte, an initiator, and the like, as necessary.

For instance, the positive electrode slurry may be prepared by adding additives such as an electrically conductive material, and a binder to a solvent containing a positive electrode active material and an electrolyte salt, and by stirring a resultant solution for a homogeneous mixing or such.

Likewise, a plurality of kinds of slurry are prepared, having a solvent or an electrolyte salt changed in quantities of addition, as necessary, to provide a desirable concentration gradient.

For the positive electrode active material, electric conductivity, binder, electrolytic high polymer, and electrolyte salt, refer to the foregoing description.

For viscosity control of positive electrode slurry, an adequate solvent such as n-methyl-2-pyrrolidone (NMP) or n-pyrrolidone may be selected in accordance with the kind of slurry.

The particle size of positive electrode active material may be set under 50µm in consideration of rubbing into the positive-electrode oriented active material layer, preferably within a range of 0.1-50µm, or more preferably within a range of 1-20µm.

The initiator is properly selected in accordance with the compounds to be polymerized and an employed method of polymerization such as for thermal polymerization, photopolymerization, radiation polymerization, or electron beam polymerization.

For instance, the initiator may be, but not limited to, benzyldimethylketal as a photoinitiator, or azobis isobutyronitrile as a thermal initiator.

For positive electrode active material, electrolyte salt, electrically conductive material, binder, and electrolytic high polymer, the quantity of addition may be controlled in accordance with the objective of cell, etc.

The addition quantity of initiator depends on the number of crosslinkable functional groups in an electrolytic high polymer employed for the gel electrolyte.

Typically, it falls within a range of about 0.01-1% in mass ratio to the electrolytic high polymer.

At the step (b) in the method of fabrication described (see sec. 2.2.2a), the "coating a collector with the plurality of kinds of positive electrode slurry" may preferably be done by one of a screen printing method, a spray coating method, an electrostatic spray coating method, and an ink jet method.

The ink jet method is a method of using a positive electrode slurry as an ink for ink jet and spreading droplets of positive electrode slurry from ink jet nozzles on a collector, enabling target regions on the collector to be coated by a desirable uniform thin-film thickness of slurry, thus allowing the positive electrode slurry to be spread in an optimum pattern. This is preferable.

Spreading positive electrode slurry "in an optimum pattern" in a coating by the ink jet method means spreading the positive electrode slurry on a collector so that an electrolyte salt has a desirable concentration gradient.

The ink jet method employs a known drop-on-demand system.

The system may preferably be a piezo type in which a ceramic piezo element deforms with a voltage imposed thereon to deliver liquid.

In the piezo type, electrode materials contained in the positive electrode slurry (i.e. positive electrode ink) are excellent in thermal stability so that the quantity of ink to be spread is variable.

A piezo type ink jet head is adapted to deliver various kinds of liquid relatively high of viscosity with an ensured stability and precision better than other types, within an effective delivery range up to a viscosity of 10Pa·s(100cp).

A typical piezo type ink jet head is configured with an ink chamber for storing a positive electrode ink in the head, and an ink introducing part communicating with the ink chamber via an ink channel.

This ink jet head has a multiplicity of nozzles arrayed in a lower portion thereof, an array of piezoelectric elements disposed in an upper portion thereof, and a driver for driving piezoelectric elements to deliver liquid of the ink chamber, to be spread from associated nozzles.

Such a structure of ink jet head is a mere illustration, and not restrictive. An ink jet head available on the market may well be used.

Metallic foils to be coated with positive electrode ink may suffer a difficulty in their feed to an ink jet printer. Such foils may be stuck on sheets of quality paper, to be fed to the ink jet printer.

A plastic-make ink introducing part may be partially dissolved by a solvent of positive electrode ink.

The ink introducing part may preferably be metallic.

The viscosity of positive electrode slurry may preferably fall within a range of 0.1-100cP at 25°C, more preferably, within a range of 0.5-10cP, or yet more preferably, within a range of 1-3cP

The preferable viscosity range may exclude a range under 0.1cP where the positive electrode ink may suffer a difficulty in liquid quantity control in the use as an ink for ink jet, and a range exceeding 100cP where the positive electrode ink may suffer a difficulty in passing nozzles in the use as an ink for ink jet.

The viscosity may well be measured by an L-type viscosimeter, a rotary viscosimeter, or the like.

In use of a high-viscous positive electrode slurry as an ink for ink jet, the positive electrode slurry coated on a collector may have a stroke, plot or thin spot.

In such a case, the positive electrode slurry may preferably be heated to an adequate viscosity, with a heater provided for the ink chamber.

A low-viscous positive electrode slurry may have a positive electrode active material deposited in the ink chamber, which may well be stirred by rotary blades or the like.

The method of spreading a positive electrode slurry by an ink jet system may preferably be one of, but not limited to: a method (1) of providing a single ink jet head, and independently controlling liquid delivery actions of a plurality of its minute-diameter nozzles, thereby spreading droplets on a collector surface in optimum pattern; and a method (2) of providing a plurality of ink jet heads, and independently controlling their liquid delivery actions, thereby spreading droplets on a collector surface in an optimum pattern.

These methods enable forming a desirable optimum pattern in a short time.

In the methods (1) and (2) described, the "independently controlling liquid delivery actions" may include, but may not be limited to, for instance, connecting an ink jet printer using the ink jet head(s) to a computer available in the market or the like, preparing a desirable pattern by software, such as Power Points (by Microsoft Corporation) or Auto CAD (by AutoDesk Corporation), read therein, and executing control with electric signals from such software.

In the method (1), the "spreading droplets on a collector surface in an optimum pattern" may exemplarily and preferably include steps of independently controlling respective liquid delivery actions of the minute-diameter nozzles, thereby spreading a kind of positive electrode slurry on the collector surface to form a thin-film layer, and thereafter, repeating spreading a kind of positive electrode slurry lower in concentration of electrolyte salt, each time to form a thin-film layer, thus laminating a plurality of coats of positive electrode slurry different in concentration, to achieve a desirable concentration gradient. Droplets of positive electrode slurries different in electrolyte salt concentration are delivered and mixed to thereby form thin-film layers. Further, the method may include a step of laminating a plurality of thin-film layers different in electrolyte salt concentration in a suitable manner to obtain a desirable concentration gradient.

In the method (2), the "spreading droplets on a collector surface in an optimum pattern" may exemplarily and preferably include a step of independently controlling the respective ink jet heads, thereby spreading delivered and mixed droplets of a plurality of kinds of positive electrode slurry different in concentration of electrolyte salt, thereby forming thin-film layers. Further, the method may include a step of laminating a plurality of thin-film layers different in electrolyte salt concentration in a suitable manner to obtain a desirable concentration gradient.

The particle size of droplets of positive electrode slurry to be delivered from ink jet head may preferably set within a range of 1-500pl, or more preferably within a range of 1-100pl, in consideration of the film thickness of thin-film layers.

The thickness of thin film to be coated and spread may preferably fall within a range of 1-100µm, or more preferably within a range of 5-50µm, as the thickness is adjustable to achieve a desirable thickness of electrode active material layer.

The preferable thickness range excludes a range under 1µm where the capacity of cell may be extremely reduced, and a range over 100µm where an elongated diffusion distance of ion in the electrode may render the resistance large.

The plurality of thin-film layers to be laminated in a positive electrode active material layer may have their thicknesses respectively determined adequately to achieve a desirable electrode characteristic, without the need to be even.

Spread positive electrode slurry may well be dried in a typical atmosphere, preferably in a vacuum atmosphere within a temperature range of 20-200°C for a period within a range of 1 minute to 8 hours, or more preferably, within a temperature range of 80-150°C for a period within a range of 3 minutes to 1 hour.

These conditions are not restrictive, so that the drying condition may be determined in a suitable manner depending on, for instance, the quantity of solvent in the spread positive electrode slurry.

The method of polymerizing electrolyte high polymer contained in positive electrode slurry may well be properly determined in accordance with an employed initiator, and in use of a photoinitiator for example, may be developed even in atmospheric air, but preferably, in an inactive atmosphere such as argon or nitrogen, or more preferably, in a vacuum atmosphere, within a temperature range of 0-150°C, more preferably, within a temperature range of 20-40°C, for a period within a range of 1 minute to 8 hours, yet more preferably, within a range of 5 minutes to 1 hour, subject to an irradiation by ultraviolet rays.

According to the embodiment, the positive-pole electrode may be fabricated otherwise.

Additionally, a plurality of coats of positive electrode slurry may well be laminated on a substrate such as an electrolyte layer or a separator soaked with electrolyte, preferably through a step of sequentially spreading a plurality of kinds of positive electrode slurry, starting from that kind which has an electrolyte salt concentration adjusted to a predetermined value, for lamination to achieve a desirable concentration gradient.

Thereafter, a collector may be joined on a lamination of dried and polymerized coats of positive electrode slurry to fabricate a positive-pole electrode, as another applicable method.

### 2.2.2c Fabrication of electrodes for negative pole

For fabrication of a negative-pole oriented electrode, at the step (a) of the method described (see sec. 2.2.2a), the plurality of kinds of electrode slurry are each respectively prepared as a corresponding solution containing a negative electrode active material (referred herein simply to "negative electrode slurry", or sometimes to "negative electrode ink" in this embodiment) and an electrolyte salt. This slurry may contain an electrically conductive material, a binder, an electrolytic high polymer as a raw material of gel electrolyte, an initiator, a film forming raw material, and the like, as necessary.

For the negative electrode active material, electrically conductive material, binder, electrolytic high polymer, electrolyte salt, initiator, solvent, film forming raw material and the like, refer to the foregoing description.

The particle size of negative electrode active material may preferably be set within a range under 50 µm, or more preferably, within a range of 0.1-20µm, as such particles are spread in the negative electrode active material layer.

At the step (b) in the method of fabrication described (see sec. 2.2.2a), the "coating a collector with the plurality of kinds of negative electrode slurry" may preferably be done in a similar manner to the positive electrode slurry.

The aforementioned manufacturing method is to form an electrode such that the electrolyte salt has a desirable concentration gradient. However, this embodiment is not limited thereto, and the electrode may be formed such that the film forming material has a desirable concentration gradient. Such a method comprises: (a) changing an adding amount of a film forming raw material constituting an electrode active material layer, thereby preparing a plurality of electrode slurries different from each other in density as well as in film forming raw material concentration, and (b) coating the electrode slurries onto the collector such that the electrode active material layer has a density gradient developed with a concentration gradient of the film forming raw material along the thickness from the electrode active material layer surface toward the collector, thereby laminating a plurality of thin-film layers different from each other in density as well as in film forming raw material concentration.

As another method, the electrode may be formed such that the electrolyte salt and film forming material have desirable concentration gradients, respectively. Namely, such a method comprises: (a) changing adding amounts of an electrolyte salt and a film forming raw material constituting an electrode active material layer, thereby preparing a plurality of electrode slurries different from each other in density as well as in electrolyte salt concentration and film forming raw material concentration, and (b) coating the electrode slurries onto the collector such that the electrode active material layer has a density gradient developed with concentration gradients of the electrolyte salt and the film forming raw material along the thickness from the electrode active material layer surface toward the collector, thereby laminating a plurality of thin-film layers different from each other in density as well as in electrolyte salt concentration and film forming raw material concentration, respectively.

It is noted that in the first embodiment the negative-pole electrode as well as the positive-pole electrode may preferably be fabricated at temperatures under a dew point of -20°C inclusive, to avoid inclusion such as of moisture into the electrode.

### 2.2.3 Applications of gel electrolyte electrodes

### 2.2.3a Gel electrolyte cell

The second embodiment provides various gel electrolyte electrodes that can withstand high rate charge or discharge, which are employed to obtain a gel electrolyte cell excellent in performance.

For example, there can be provided a cell specialized in high rate discharge, when the cell comprises: a positive electrode comprising a collector and a positive-electrode oriented active material layer such that the positive electrode has an electrolyte salt concentration gradient increased along the thickness from a positive-electrode oriented electrolyte layer surface toward the collector; a negative electrode comprising a collector and a negative-electrode oriented active material layer such that the negative electrode has an electrolyte salt concentration gradient decreased along the thickness from a negative-electrode oriented electrolyte layer surface toward the collector; and an electrolyte layer.

In a conventional cell having a constant concentration of electrolyte salt in the electrodes, there was a possibility of depletion of Li ion in the positive electrode at high rate discharge. Further, when the concentration of an electrolyte salt is kept uniform in the negative electrode, Li-ion conductivity might be lowered. However, the negative electrode in the cell of this embodiment contains the electrolyte salt having the aforementioned concentration gradient, so that the negative electrode readily releases Li ion. Further, the positive electrode contains the electrolyte salt having such a concentration gradient that the electrolyte salt concentration of the positive-electrode oriented active material layer is high near the collector. This facilitates diffusion of Li ion, and the large amount of electrolyte salt is contained in the positive-electrode oriented active material layer near the collector to thereby avoid deplete of Li ion, thereby avoiding occurrences of over-voltage.

In the cell at high rate charge, it is sufficient to establish concentration gradients opposite to those of the electrodes (positive and negative electrodes) at discharge. Namely, there can be provided a cell specialized in high rate charge such as regeneration, by configuring the cell with: a positive electrode comprising a collector and a positive-electrode oriented active material layer such that the positive electrode has a gradient of an electrolyte salt concentration decreased along the thickness from a positive-electrode oriented electrolyte layer surface toward the collector; a negative electrode comprising a collector and a negative-electrode oriented active material layer such that the negative electrode has a gradient of an electrolyte salt concentration increased along the thickness from a negative-electrode oriented electrolyte layer surface toward the collector; and an electrolyte layer. Here, the term "regeneration" means such a situation where a brake is applied in a hybrid electric vehicle utilizing the motor for starting and accelerating the vehicle, so as to rotate the motor by a kinetic energy of the vehicle in a manner reverse to discharge, to thereby charge a cell.

Combination of the aforementioned cells specialized in high rate discharge and high rate charge enable discharge and charge of a greater electric current in a short time, and such cells are suitably utilized in a hybrid electric vehicle, for example.

Further, in the cell of this embodiment, the negative-electrode oriented active material layer has such a concentration gradient that the film forming material concentration is increased along the thickness from the negative-electrode oriented electrolyte layer surface toward the collector, thereby enabling an increased Li-ion conductivity. Since the film forming material is a cause for lowering the Li-ion conductivity, such a concentration gradient enables a decreased concentration of the film forming material, thereby enabling a cell specialized in high rate discharge and charge. It may be more preferable to include such a concentration gradient of the film forming material in the negative electrode of the aforementioned cell specialized in high rate discharge or high rate charge. This enables provision of a cell specialized in high rate charge or discharge.

The cell has its electrolyte layers preferably comprising gel electrolytes.

For formation of such electrolyte layer, an adequate electrolyte slurry (referred sometimes to "electrolyte ink" in this embodiment) is prepared, containing electrolytic high polymer and electrolyte salt, as well as initiator, solvent, etc. These ingredients may be properly prepared to obtain a desirable high polymer electrolyte layer.

The electrolytic high polymer and electrolyte salt are similar to those described.

The gel electrolyte may be formed by, but not limited to, polymerizing a monomer by using an electrolytic solution that contains an electrolytic high polymer.

The electrolytic high polymer and electrolytic solution, as well as their proportions, are similar to those described.

However, the quantity of electrolytic solution contained in the gel electrolyte may preferably be held substantially even therein, or reduced from the center in an inclined manner toward the periphery.

The former allows reaction over a wider region, as an advantage. The latter has, at the periphery, an enhanced sealability against electrolytic solution of full-solid high polymer electrolyte portion, as an advantage.

The smaller in thickness the gel electrolyte layer is, the better performance it has in reduction of internal resistance.

The thickness of electrolyte layer may fall within a range of 0.1-100µm, preferably within a range of 1-20µm, or more preferablt within a range of 5-20µm.

This thickness refers to the thickness of electrolyte layer provided between positive-pole and negative-pole electrodes.

Therefore, in some electrolyte layer fabrication method, the electrolyte layer may be formed by joining, such as by sticking together, a plurality of electrolyte films identical or different in thickness, or coating them by an ink jet method. Even in such a case, the thickness of electrolyte layer refers to that formed by joining the electrolyte films.

The gel electrolyte cell according to this embodiment may be fabricated by, but not limited to, steps of forming a positive electrode active material layer on a collector in a described manner, laminating thereon an electrolyte layer and a negative electrode electrolyte layer to provide a lamination by an ink jet system, holding this between collectors or the like, and sealing a resultant laminate with a cell case so that simply positive-pole and negative-pole electrode leads extend outside the cell.

The gel electrolyte layer, positive-pole electrode, and negative-pole electrode have their gel electrolyte, as necessary, which may be identical or different.

Electrolyte slurry may preferably be coated by, but not limited to, using a piezo type ink jet system, which allows the high polymer electrolyte layer to be formed very thin.

The viscosity of electrolyte slurry may be similar to that of above described positive electrode slurry.

The size of spread electrolyte layer may preferably be a little greater than that of an electrode forming portion.

Spread electrolyte slurry may be dried and polymerized in a similar manner to the above described positive electrode slurry.

Polymerized electrolyte slurry may be used to form a negative electrode active material layer in an ink jet method similar to the described manner, to provide a desirable concentration gradient.

A thus prepared laminate may be held between separate collectors or the like, and sealed with a cell case so that simply leads of positive-pole and negative-pole electrodes extend outside the cell.

The cell case may be configured to prevent external impact upon usage or environmental deterioration in use.

For example, a sheath made of a laminate material having laminated high polymer films and metallic foils may be thermally fusion-bonded to be joined along the periphery, or configured in an envelope form to be thermally fusion-bonded to be closed tight at the opening, so that lead terminals of positive-pole and negative-pole electrodes can be drawn out from the fusion-bonded part.

The number of lead draw-out parts may be one or more for each lead terminal.

The material of cell case may be else than described, for instance, plastic, metal, rubber, or the like, or combination of them. The configuration may also be film-shape, planer, or box-shape.

The cell case may be provided with a connector for connection between a cell inner end thereof connected to a collector, and a cell outer end thereof connected to a lead terminal to take out a current therefrom.

According to this embodiment, the gel electrolyte cell may be a lithium ion secondary cell, sodium ion secondary cell, potassium ion secondary cell, magnesium ion secondary cell, or calcium ion secondary cell.

The lithium ion secondary cell is preferable from a practical viewpoint.

The gel electrolyte cell using electrodes according to the embodiment may be categorized by configuration or structure into, but not limited to, a (planer) laminate cell, a (cylindrical) rolled cell, or any known form or type else.

As advantages, the gel electrolyte cell has no liquid to leak, and is free from the problem of short-circuit by liquid, thus having high reliability, simple in structure, and excellent in output characteristic.

The gel electrolyte cell may be improved in output characteristics, by using a lithium-transition metal complex oxide as the positive electrode active material, which is a low-cost material excellent in reactivity and cycle durability, as advantage.

The gel electrolyte cell may have an advantage in cost and workability, by employing the (planer) laminate structure which can provide an ensured long reliability by a simple sealing technique such as a thermal pressure bonding.

### 2.2.3b Bipolar cell

From the viewpoint of internal electrical connection (electrode structure), the gel electrolyte cell according to this embodiment may be categorized into a bipolar cell (an internally serial-connected type) or non-bipolar cell (an internally parallel-connected type).

The bipolar cell has a relatively high voltage as a simplex cell, and allows fabrication of a cell excellent in capacity and output characteristics.

The gel electrolyte cell according to this embodiment may preferably be fabricated as an excellent bipolar lithium ion secondary cell (referred herein sometimes simply to "bipolar cell").

### 2.2.3c Complex cell

According to this embodiment, a complex cell may be formed with a plurality of gel electrolyte cells, or preferably, with a plurality of bipolar cells.

In other words, two or more bipolar cells according to the embodiment may be connected in serial-parallel to provide a complex cell as a high-capacity, high-output cell or battery module, which allows objective-dependent various demands for cell capacity and output to be coped with at relatively low costs.

### 2.2.3d Vehicle

According to this embodiment, the gel electrolyte cell has various advantages, and is preferable in application to vehicles, in particular as a driving power supply for vehicles severe of demand for energy and output density, such as an electric vehicle or hybrid electric vehicle. For example, it can provide an electric vehicle or hybrid electric vehicle excellent in fuel consumption and travelling performance.

Such an electric vehicle or hybrid electric vehicle may preferably have a set of complex cells mounted as a driving power supply under, but not limited to, a central seat of the vehicle, with an advantageous wide space left for the passenger's room or trunk room.

The set of complex cells may be installed under a vehicular floor, or in a trunk room, engine room, roof space, bonnet hood, etc.

The set of cells may preferably comprise complex cells, bipolar cells, or combination thereof, as suitable for the objective.

The cell set of bipolar and/or complex cells may preferably be mounted in, but not limited to, an electric vehicle or hybrid electric vehicle.

### Part-3 Specific Examples

This Part covers:
3.1 Examples of first embodiment
3.2 Examples of second embodiment
3.1 Examples of first embodiment

The first embodiment is exemplified below.

### 3.1.1 Example-1

### 3.1.1a Preparation of positive electrode ink.

A quantity (90g in weight) of spinel structure LiMn₂O₄ (particle size: 0.6 *µ* m in average) as a positive electrode active material, a quantity (5g in weight) of acetylene black as an electrically conductive material, and a quantity (5g in weight) of polyvinylidene fluoride as a binder were mixed, and as a solvent to this mixture a quantity (300g in weight) of acetonitrile was admixed, thereby preparing a kind of slurry as a positive electrode ink-1. The positive electrode ink-1 had a viscosity of 3 cP at a temperature of 25°C.

Next, the positive electrode active material, electrically conductive material, and binder were mixed in the same amounts as those of the positive electrode ink-1, and as a solvent to this mixture a quantity (500g in weight) of acetonitrile was admixed, thereby preparing another kind of slurry as a positive electrode ink-2 thinner in solid concentration than the positive electrode ink-1. The positive electrode ink-2 had a viscosity of 2 cP at a temperature of 25°C.

Further, the positive electrode active material, conductive material, and binder were mixed in the same amounts as those of the positive electrode ink-1, and as a solvent to this mixture a quantity (900g in weight) of acetonitrile was admixed, thereby preparing yet another kind of slurry as a positive electrode ink-3 thinner in solid concentration than the positive electrode ink-2. The positive electrode ink-3 had a viscosity of 1 cP at a temperature of 25°C.

### 3.1.1b Preparation of negative electrode ink

A quantity (90g in weight) of pulverized graphite (particle size: 0.7 *µ*m in average) as a negative electrode active material, a quantity (5g in weight) of acetylene black as an electrically conductive material, and a quantity (5g in weight) of polyvinylidene fluoride as a binder were mixed, and as a solvent to this mixture a quantity (300g in weight) of acetonitrile was adimxed, thereby preparing a kind of slurry as a negative electrode ink-1. The negative electrode ink-1 had a viscosity of 3 cP at a temperature of 25°C.

Next, the negative electrode active material, electrically conductive material, and binder were mixed in the same amounts as those of the negative electrode ink-1, as a solvent to this mixture a quantity (500g in weight) of acetonitrile was admixed, thereby preparing another kind of slurry as a negative electrode ink-2 thinner in solid concentration than the negative electrode ink-1. The negative electrode ink-2 had a viscosity of 2 cP at a temperature of 25°C.

Further, the negative electrode active material, electrically conductive material, and binder were mixed in the same amounts as those of the negative electrode ink-1, and as a solvent to this mixture a quantity (900g in weight) of acetonitrile was admixed, thereby preparing yet another kind of slurry as a negative electrode ink-3 thinner in solid concentration than the negative electrode ink-2. The negative electrode ink-3 had a viscosity of 1 cP at a temperature of 25°C.

### 3.1.1c Preparation of electrolyte ink

A quantity (160g in weight) of macromer between polyethylene oxide and polypropylene oxide as an electrolyte polymer identical to that in the preparation of positive electrode ink, a quantity (80g in weight) of LiBETI as an electrolyte salt, and a quantity (0.1 mass % of the electrolyte polymer) of benzyldimethyl-ketal as a photochemical polymerization initiator were prepared, a quantity (760g in weight) of acetonitrile was added as a solvent thereto, and the mixture was sufficiently stirred, thereby preparing a slurry as an electrolyte ink. This ink had a viscosity of 2 cP.

### 3.1.1d Fabrication of secondary cell

Positive and negative electrodes (corresponding to electrode in FIG.2 or FIG. 3) were fabricated by applying the prepared positive electrode ink-1 to positive electrode ink-3 and negative electrode ink-1 to negative electrode ink-3, using a commercially available ink jet printer in the following manner.

There had been an issue in use of similar inks, such that a plastic member forming an ink-introducing part of the ink jet printer was dissolved by acetonitrile as a solvent. Therefore, the plastic member was replaced with a metallic member, and ink was directly supplied from an ink sump to the metallic member. Additionally, to avoid a precipitation of active material due to a reduced ink viscosity, the ink sump was stirred using a rotary blade at all times.

The ink jet printer was controlled with a commercially available computer and software. For fabrication of a positive electrode, the positive electrode ink-1 to positive electrode ink-3 were all used. They were printed by the ink jet printer, in a pattern mapped from the computer. To avoid the difficulty in a direct feed of metallic foil and non-aqueous electrolyte film to the printer, these electrode components were stuck on an A4-size sheet of high-quality paper, which was supplied to the printer for printing.

The positive electrode ink-1 to positive electrode ink-3 were introduced into the ink jet printer improved in the described manner, whereby they were printed in their print patterns mapped from the computer on a current collector (corresponding to collector 1 of FIG 2 or FIG. 3) of a stainless steel foil 20 *µ*m thick, to thereby form a positive electrode layer (corresponding to a combination of 1+ 12 of FIG 2 or combination of 1+22 of FIG 3) composed of the collector and a positive electrode active material layer (corresponding to electrode active material layer 12 of FIG 2 or 22 of FIG. 3) formed thereon.

More specifically, a positive electrode thin layer-1 (corresponding to zone 12c of FIG 2 or coat 22c of FIG 3) was printed with a thickness of 5 *µ*m on the collector, by applying the positive electrode ink-1. Then, another positive electrode thin layer-2 (corresponding to zone 12b of FIG 2 or coat 22b of FIG 3) was printed with a thickness of 5 *µ*m on the positive electrode thin layer-1, by applying the positive electrode ink-2. Further, yet another positive electrode thin layer-3 (corresponding to zone 12a of FIG 2 or coat 22a of FIG 3) was printed with a thickness of 5 *µ*m on the positive electrode thin layer-2, by applying the positive electrode ink-3. In order to dry solvent of each printed positive electrode thin layer, the thin layer was dried in an evacuated oven at a temperature of 60°C for two hours.

The electrolyte ink was impregnated into the positive electrode thin layer-1 to positive electrode thin layer-3, which were irradiated with ultra violet rays for twenty minutes under an evacuated condition, thereby having nonaqueous electrolyte retained in the positive electrode thin layer-1 to positive electrode thin layer-3.

Through the three times of pattern printing, the active material layer of the positive electrode layer was formed with a density gradient developed with a gradient of solid concentration increased along the thickness from a surface of the positive electrode active material layer toward the current collector.

Next, the electrolyte ink was introduced into the improved ink jet printer, whereby it was printed over the positive electrode layer, so that it was spread over the active material layer with a slight overhang at edges thereof. The positive electrode layer having an electrolyte layer thus printed was dried in an evacuated oven at a temperature of 60°C for two hours, thereby drying solvent, and was irradiated with violet rays under an evacuated condition for twenty minutes, thereby polymerizing electrolyte polymer, so that a nonaqueous electrolyte layer (corresponding to layer 3 of FIG. 2 or FIG. 3) was formed on the active material layer of the positive electrolyte layer. The nonaqueous electrolyte layer was uniform without irregularities.

Then, the negative electrode ink-1 to negative electrode-3 were introduced into the improved ink jet printer, whereby they were printed in their print patterns mapped from the computer on the above-noted nonaqueous electrolyte layer, to form thereon an active material layer (corresponding to layer 12 of FIG. 2 or 22 of FIG. 3) of negative electrode.

More specifically, a negative electrode thin layer-3 (corresponding to zone 12a of FIG. 2 or coat 22a of FIG. 3) was printed with a thickness of 5 *µ*m on the nonaqueous electrolyte layer, by applying the negative electrode ink-3. Then, another negative electrode thin layer-2 (corresponding to zone 12b of FIG. 2 or coat 22b of FIG. 3) was printed with a thickness of 5 *µ*m on the negative electrode thin layer-3, by applying the negative electrode ink-2. Further, yet another negative electrode thin layer-1 (corresponding to zone 12c of FIG. 2 or coat 22c of FIG. 3) was printed with a thickness of 5 *µ*m on the negative electrode thin layer-2, by applying the negative electrode ink-1. In order to dry solvent of each printed negative electrode thin layer, the thin layer was dried in an evacuated oven at a temperature of 60°C for two hours.

The electrolyte ink was impregnated into the dried negative electrode thin layer-1 to negative electrode thin layer-3, which were irradiated with ultra violet rays for twenty minutes under an evacuated condition, thereby having nonaqueous electrolyte retained in the negative electrode thin layer-1 to negative electrode thin layer-3.

Through the three times of pattern printing, the active material layer of the negative electrode layer was formed with a density gradient developed with a gradient of solid concentration increased along the thickness from a bottom surface of the negative electrode active material layer toward a top surface thereof.

The top surface of the negative electrode active material layer was covered with a current collector. A resultant lamination of positive electrode layer, nonaqueous electrolyte layer, negative electrode layer, and collector had a sandwiched structure between current-collecting stainless steel foils, of which an entirety was enclosed and sealed with an aluminum laminate material to be molded, simply having positive-pole and negative-pole lead wires exposed outside, to provide a nonaqueous electrolyte secondary cell.

### 3.1.2 Comparative example-1

### 3.1.2a Formation of positive electrode layer

A quantity (90g in weight) of spinel structure LiMn₂O₄ as a positive electrode active material, a quantity (5g in weight) of acetylene black as an electrically conductive material, a quantity (5g in weight) of polyvinylidene fluoride as a binder, and a quantity (100g in weight) of acetonitrile as a solvent were mixed, thereby preparing a positive electrode slurry. This slurry was coated on one side of a stainless steel foil (20 *µ*m thick) as a current collector. Then, the coated slurry was dried at a temperature of approximately 110°C, so that a 15 *µ*m thick positive electrode layer was formed.

### 3.1.2b Formation of negative electrode layer

A quantity (90g in weight) of pulverized graphite (particle size: 0.6 *µ*m in average) as a negative electrode active material, a quantity (5g in weight) of acetylene black as an electrically conductive material, a quantity (5g in weight) of polyvinylidene fluoride as a binder, and a quantity (100g in weight) of acetonitrile as a solvent were mixed, thereby preparing a negative electrode slurry. This slurry was coated on the above-noted stainless steel foil, at the opposite side to the positive electrode layer. Then, the coated slurry was dried at a temperature of approximately 110°C, so that that a 15 *µ*m thick negative electrode layer was formed.

### 3.1.2c Formation of gel electrolyte layer

A quantity (160g in weight) of macromer between polyethylene oxide and polypropylene oxide as an electrolyte polymer identical to that of example-1, a quantity (240g in weight) N-methyl pyrolidene as a solvent, a quantity (80g in weight) of 0.1M LiBETI as an electrolyte salt, and a quantity (0.1 mass % of the electrolyte polymer) of benzyldimethyl-ketal as a polymerization initiator were mixed, thereby preparing a pre-gel solution. This solution was impregnated into a piece of PP-made unwoven fabric (100 *µ*m thick), which was subjected to a thermal polymerization under an inactive atmosphere at a temperature of 90°C, thereby forming a separator having gel electrolyte retained therein.

### 3.1.2d Fabrication of secondary cell

The above-noted pre-gel solution was impregnated into the positive and negative electrode layers, which were subjected to a thermal polymerization under an inactive atmosphere at a temperature of 90°C, so that the electrode layers had gel electrolyte retained therein.

These electrode layers were laminated, with the gel electrolyte separator sandwiched in between. Then, an entirety of this lamination was enclosed and sealed with aluminum laminate films constituting a cell exterior to be molded, simply having positive-pole and negative-pole lead wires exposed outside, to provide a gel electrolyte secondary cell.

### 3.1.2e Evaluation

The secondary cell fabricated in the example-1 and that in the comparative example-1 were put in a thermostatic chamber, where their temperatures were held at 25°C, to enter a discharge performance test using a charge-discharge device.

In the discharge performance test, the secondary cells were charged at a constant current with a constant voltage up to a full charge state (4.2V), and subjected to a constant-current discharge at a current rate of 20 CA to a reduced level of 2.5V, before measurements of their discharge capacities in a high-rate discharge to determine their discharge rates {(discharge capacity at 10 CA/ theoretical capacity) x 100 %}, of which results are listed in Table-1.

The theoretical capacity of secondary cell was determined on bases of a theoretical capacity of employed positive electrode active material and a quantity of coated positive electrode active material.

**Table 1**

| | Example-1 | Comparative example-1 |
|---|---|---|
| Discharge rate at high-rate discharge,% | 84 | 53 |

As in Table 1, the discharge rate was 84% for example-1, but 53% for comparative example-1, thus proving the secondary cell of the former to be superior.

### 3.2 Examples of second embodiment

The second embodiment is exemplified below.

### 3.2.1 Example-2

### 3.2.1a Preparation of positive electrode ink

A quantity (90g in weight) of spinel structure LiMn₂O₄ (particle size: 0.6 *µ* m in average) as a positive electrode active material, a quantity (5g in weight) of acetylene black as an electrically conductive material, a quantity (5g in weight) of polyvinylidene fluoride as a binder, a quantity (40g in weight) of LiBETI as an electrolyte salt, a quantity (40g in weight) of macromer of ethylene oxide and propylene oxide as an electrolyte polymer synthesized in accordance with a method described in Japanese Patent Application Laid-Open Publication No. 2002-110239, and a quantity (0.1 mass % of the electrolyte polymer) of benzyldimethyl-ketal as a photochemical polymerization initiator were mixed, and as a solvent to this mixture a quantity (820g in weight) of acetonitrile was admixed, thereby preparing a kind of slurry as a positive electrode ink-4. The positive electrode ink-4 had a viscosity of 3 cP at a temperature of 25°C.

Next, the same quantities of positive electrode active material, electrically conductive material, binder, electrolyte polymer, and photochemical polymerization initiator as the positive electrode ink-4 were mixed with a quantity (30g in weight) of LiBETI as an electrolyte salt, and as a solvent to this mixture a quantity (830g in weight) of acetonitrile was admixed, thereby preparing another kind of slurry as a positive electrode ink-5 thinner in electrolyte salt concentration than the positive electrode ink-4. The positive electrode ink-5 had a viscosity of 3 cP at a temperature of 25°C.

Further, the same quantities of positive electrode active material, electrically conductive material, binder, electrolyte polymer, and photochemical polymerization initiator as the positive electrode ink-4 were mixed with a quantity (20g in weight) of LiBETI as an electrolyte salt, and as a solvent to this mixture a quantity (840g in weight) of acetonitrile was admixed, thereby preparing yet another kind of slurry as a positive electrode ink-6 thinner in electrolyte salt concentration than the positive electrode ink-5. The positive electrode ink-6 had a viscosity of 3 cP at a temperature of 25°C.

### 3.2.1b Preparation of negative electrode ink

A quantity (90g in weight) of pulverized graphite (particle size: 0.6 *µ*m in average) as a negative electrode active material, a quantity (5g in weight) of acetylene black as an electrically conductive material, a quantity (5g in weight) of polyvinylidene fluoride as a binder, a quantity (40g in weight) of LiBETI as an electrolyte salt, a quantity (40g in weight) of macromer between polyethylene oxide and polypropylene oxide as an electrolyte polymer similar to that employed in the preparation of positive electrode ink, and a quantity (0.1 mass % of the electrolyte polymer) of benzyldimethyl-ketal as a photochemical polymerization initiator were mixed, and as a solvent to this mixture a quantity (820g in weight) of acetonitrile was adimxed, thereby preparing a kind of slurry as a negative electrode ink-4. The negative electrode ink-4 had a viscosity of 3 cP at a temperature of 25°C.

Next, the same quantities of negative electrode active material, electrically conductive material, binder, electrolyte polymer, and photochemical polymerization initiator as the negative electrode ink-4 were mixed with a quantity (30g ih weight) of LiBETI as an electrolyte salt, and as a solvent to this mixture a quantity (830g in weight) of acetonitrile was admixed, thereby preparing another kind of slurry as a negative electrode ink-5 thinner in electrolyte salt concentration than the negative electrode ink-4. The negative electrode ink-5 had a viscosity of 3 cP at a temperature of 25°C.

Further, the same quantities of negative electrode active material, electrically conductive material, binder, electrolyte polymer, and photochemical polymerization initiator as the negative electrode ink-4 were mixed with a quantity (20g in weight) of LiBETI as an electrolyte salt, and as a solvent to this mixture a quantity (840g in weight) of acetonitrile was admixed, thereby preparing yet another kind of slurry as a negative electrode ink-6 thinner in electrolyte salt concentration than the negative electrode ink-5. The negative electrode ink-6 had a viscosity of 3 cP at a temperature of 25°C.

### 3.2.1c Preparation of electrolyte ink

A quantity (160g in weight) of macromer between polyethylene oxide and polypropylene oxide as an electrolyte polymer identical to that in the preparation of positive electrode ink, a quantity (80g in weight) of LiBETI as an electrolyte salt, and a quantity (0.1 mass % of the electrolyte polymer) of benzyldimethyl-ketal as a photochemical polymerization initiator were prepared, a quantity (760g in weight) of acetonitrile was added as a solvent thereto, and the mixture was sufficiently stirred, thereby preparing a slurry as an electrolyte ink. This ink had a viscosity of 2 cP.

### 3.2.1d Fabrication of secondary cell

Positive and negative electrodes (corresponding to electrode in FIG.4 or FIG. 5) were fabricated by applying the prepared positive electrode ink-4 to positive electrode ink-6 and negative electrode ink-4 to negative electrode ink-6, using a commercially available ink jet printer in the following manner.

As described, there had been an issue in use of similar inks, such that a plastic member forming an ink-introducing part of the ink jet printer was dissolved by acetonitrile as a solvent. Therefore, the plastic member was replaced with a metallic member, and ink was directly supplied from an ink sump to the metallic member. Additionally, to avoid a precipitation of active material due to a reduced ink viscosity, the ink sump was stirred using a rotary blade at all times.

The ink jet printer was controlled with a commercially available computer and software. For fabrication of a positive electrode, the positive electrode ink-4 to positive electrode ink-6 were used. They were printed by the ink jet printer, in a pattern mapped from the computer. To avoid the difficulty in a direct feed of metallic foil and gel electrolyte film to the printer, these electrode components were stuck on an A4-size sheet of high-quality paper, which was supplied to the printer for printing.

The positive electrode ink-4 to positive electrode ink-6 were introduced into the ink jet printer improved in the described manner, whereby they were printed in their print patterns mapped from the computer on a current collector (corresponding to collector 1 of FIG. 4 or FIG. 5) of a stainless steel foil 20 *µ*m thick, to thereby form a positive electrode layer (corresponding to a combination of 1+ 32 of FIG. 4 or combination of 1+42 of FIG. 5) composed of the collector and a positive electrode active material layer (corresponding to electrode active material layer 32 of FIG. 4 or 42 of FIG. 5) formed thereon.

More specifically, a positive electrode thin layer-4 (corresponding to zone 32c of FIG. 4 or coat 42c of FIG. 5) was printed with a thickness of 5 *µ*m on the collector, by applying the positive electrode ink-4. Then, another positive electrode thin layer-5 (corresponding to zone 32b of FIG. 4 or coat 42b of FIG. 5) was printed with a thickness of 5 *µ*m on the positive electrode thin layer-4, by applying the positive electrode ink-5. Further, yet another positive electrode thin layer-6 (corresponding to zone 32a of FIG. 4 or coat 42a of FIG. 5) was printed with a thickness of 5 *µ*m on the positive electrode thin layer-5, by applying the positive electrode ink-6. In order to dry solvent of each printed positive electrode thin layer, the thin layer was dried in an evacuated oven at a temperature of 60°C for two hours.

The positive electrode thin layer-4 to positive electrode thin layer-6 were irradiated with ultra violet rays for twenty minutes under an evacuated condition, thereby having gel electrolyte retained in the positive electrode thin layer-4 to positive electrode thin layer-6. Through the three times of pattern printing, the active material layer of the positive electrode layer was formed with a density gradient developed with a gradient of electrolyte concentration increased along the thickness from a surface of the positive electrode active material layer toward the current collector.

Next, the electrolyte ink was introduced into the improved ink jet printer, whereby it was printed over the positive electrode layer, so that it was spread over the active material layer with a slight overhang at edges thereof. The positive electrode layer having an electrolyte layer thus printed was dried in an evacuated oven at a temperature of 60°C for two hours, thereby drying solvent, and was irradiated with violet rays under an evacuated condition for twenty minutes, thereby polymerizing electrolyte polymer, so that a gel electrolyte layer (corresponding to layer 3 of FIG. 4 or FIG. 5) was formed on the active material layer of the positive electrolyte layer. The gel electrolyte layer was uniform without irregularities.

Then, the negative electrode ink-4 to negative electrode-6 were introduced into the improved ink jet printer, whereby they were printed in their print patterns mapped from the computer on the above-noted gel electrolyte layer, to form thereon an active material layer of negative electrode.

More specifically, a negative electrode thin layer-4 was printed with a thickness of 5 *µ*m on the gel electrolyte layer, by applying the negative electrode ink-4. Then, another negative electrode thin layer-5 was printed with a thickness of 5 *µ*m on the negative electrode thin layer-4, by applying the negative electrode ink-5. Further, yet another negative electrode thin layer-6 was printed with a thickness of 5 *µ*m on the negative electrode thin layer-5, by applying the negative electrode ink-6. In order to dry solvent of each printed negative electrode thin layer, the thin layer was dried in an evacuated oven at a temperature of 60°C for two hours.

The negative electrode thin layer-1 to negative electrode thin layer-3 were irradiated with ultra violet rays for twenty minutes under an evacuated condition, thereby having gel electrolyte retained in the negative electrode thin layer-1 to negative electrode thin layer-3. Through the three times of pattern printing, the active material layer of the negative electrode layer was formed with a density gradient developed with a gradient of electrolyte concentration decreased along the thickness from a bottom surface of the negative electrode active material layer toward a top surface thereof.

The top surface of the negative electrode active material layer was covered with a current collector. A resultant lamination of positive electrode layer, gel electrolyte layer, negative electrode layer, and collector had a sandwiched structure between current-collecting stainless steel foils, of which an entirety was enclosed and sealed with an aluminum laminate material to be molded, simply having positive-pole and negative-pole lead wires exposed outside, to provide a gel electrolyte secondary cell.

### 3.2.2 Comparative example-2

### 3.2.2a Formation of positive electrode layer

A quantity (90g in weight) of spinel structure LiMn₂O₄ as a positive electrode active material, a quantity (5g in weight) of acetylene black as an electrically conductive material, a quantity (5g in weight) of polyvinylidene fluoride as a binder, and a quantity (100g in weight) of acetonitrile as a solvent were mixed, thereby preparing a positive electrode slurry. This slurry was coated on one side of a stainless steel foil (20 *µ*m thick) as a current collector. Then, the coated slurry was dried at a temperature of approximately 110°C, so that a 15 *µ*m thick positive electrode layer was formed.

### 3.2.2b Formation of negative electrode layer

A quantity (90g in weight) of pulverized graphite (particle size: 0.6 *µ*m in average) as a negative electrode active material, a quantity (5g in weight) of acetylene black as an electrically conductive material, a quantity (5g in weight) of polyvinylidene fluoride as a binder, and a quantity (100g in weight) of acetonitrile as a solvent were mixed, thereby preparing a negative electrode slurry. This slurry was coated on the above-noted stainless steel foil, at the opposite side to the positive electrode layer. Then, the coated slurry was dried at a temperature of approximately 110°C, so that that a 15 *µ*m thick negative electrode layer was formed.

### 3.2.2c Formation of gel electrolyte layer

A quantity (160g in weight) of macromer between polyethylene oxide and polypropylene oxide as an electrolyte polymer identical to that of example-2, a quantity (240g in weight) N-methyl pyrolidene as a solvent, a quantity (80g in weight) of 0.1M LiBETI as an electrolyte salt, and a quantity (0.1 mass % of the electrolyte polymer) of benzyldimethyl-ketal as a polymerization initiator were mixed, thereby preparing a pre-gel solution. This solution was impregnated into a piece of PP-made unwoven fabric (100 *µ*m thick), which was subjected to a thermal polymerization under an inactive atmosphere at a temperature of 90°C, thereby forming a separator having gel electrolyte retained therein.

### 3.2.2d Fabrication of secondary cell

The above-noted pre-gel solution was impregnated into the positive and negative electrode layers, which were subjected to a thermal polymerization under an inactive atmosphere at a temperature of 90°C, so that the electrode layers had gel electrolyte retained therein.

These electrode layers were laminated, with the gel electrolyte separator sandwiched in between. Then, an entirety of this lamination was enclosed and sealed with aluminum laminate films constituting a cell exterior to be molded, simply having positive-pole and negative-pole lead wires exposed outside, to provide a gel electrolyte secondary cell.

### 3.2.2e Evaluation

The secondary cell fabricated in the example-2 and that in the comparative example-2 were put in a thermostatic chamber, where their temperatures were held at 25°C, to enter a discharge performance test using a charge-discharge device.

In the discharge performance test, the secondary cells were charged at a constant current with a constant voltage up to a full charge state (4.2V), and subjected to a constant-current discharge at a current rate of 20 CA to a reduced level of 2.5V, before measurements of their discharge capacities in a high-rate discharge to determine their discharge rates {(discharge capacity at 20 CA/ theoretical capacity) x 100 %}, of which results are listed in Table-2.

The theoretical capacity of secondary cell was determined on bases of a theoretical capacity of employed positive electrode active material and a quantity of coated positive electrode active material.

**Table 2**

| | Example-2 | Comparative example-2 |
|---|---|---|
| Discharge rate at high-rate discharge, % | 21 | 12 |

As in Table 2, the discharge rate was 21% for example-2, but 12% for comparative-example-2, thus proving the secondary cell of the former to be superior.

### Part-4 Supplements

It is noted that the "density gradient" of electrode active material layer is a collective expression of, and includes, an intended change or gradient of concentration or a plurality of intended co-existing changes or gradients of concentrations of one or more constituent elements or ingredients (e.g. solids, electrolyte salts, and/or film forming raw materials) in that layer, and the artisan may provide a very critical or substantially critical configuration in which the density is strictly or substantially kept constant at least in a thickness direction of the layer, allowing for intentionally varied proportions of ingredients to provide a changed ingredient concentration for, e.g., changing the resistance to diffusion of mobile particles, such as ions.

The description refers to Japanese Patent Application No. 2003-283974 filed July 31, 2003, in Japan, and Japanese Patent Application No. 2003-283975'filed July 31, 2003, in Japan.

Although the invention has been described above by reference to some embodiments of the invention, the invention is not limited to the embodiments described. Modifications and variations of the embodiments will occur to those skilled in the art, in light of the teachings. The scope of the invention is defined with reference to the following claims.

### Industrial Applicability

The present invention has wide applications to the industrial field of secondary cells, in particular to configuration, fabrication, and industrial application of nonaqueous electrolyte electrodes and gel electrolyte electrodes to be adapted for high rate charge or discharge.

## Claims

1. A secondary cell electrode comprising an electrode active material layer formed on a collector, the electrode active material layerhaving a density gradient developed with a gradient of a solid concentration increasing along a thickness from a surface of the electrode active material layer toward the collector,
wherein the solid concentration is a concentration of an electrode active material
or
wherein the solid concentration includes concentrations of an electrode active material, an electrically conductive material, and a binder.

2. The secondary cell electrode as claimed in claim 1, comprising a nonaqueous electrolyte cell-oriented electrode.

3. The secondary cell electrode as claimed in claim 2, wherein the electrode active material layer comprises a plurality of laminated thin film layers different in the solid concentration.

4. The secondary cell electrode as claimed in claim 2, wherein the electrode active material layer has a thickness within a range of 1-100µm.

5. The secondary cell electrode as claimed in claim 1, comprising a gel electrolyte cell-oriented electrode In which the electrode active material layer is formed on the collector, having the density gradient developed with a gradient of a concentration of an electrolyte salt along the thickness from a surface of the electrode active material layer toward the collector.

6. The secondary cell electrode as claimed in claim 5, wherein the electrode active material layer comprises a plurality of laminated thin film layers different in concentration of the electrolyte salt.

7. The secondary cell electrode as claimed in claim 1, comprising a gel electrolyte cell-oriented electrode in which the electrode active material layer is formed on the collector, having the density gradient developed with a gradient of a concentration of a film forming material along the thickness from a surface of the electrode active material layer toward the collector.

8. The secondary cell electrode as claimed in claim 7, wherein the electrode active material layer comprises a plurality of laminated thin film layers different in concentration of the film forming material.

9. The secondary cell electrode as claimed in claim 1, comprising a gel electrolyte cell-oriented electrode In which the electrode active material layer is formed on the collector, having the density gradient developed with gradients of concentrations of an electrolyte salt and a film forming material along the thickness from a surface of the electrode active material layer toward the collector.

10. The secondary cell electrode as claimed in claim 9, wherein the electrode active material layer comprises a plurality of laminated thin film layers different in concentrations of the electrolyte salt and the film forming material.

11. The secondary cell electrode as claimed in claim 1, wherein the electrode active material layer has a thickness within a range of 1-100µm.

12. A fabrication method comprising fabricating a secondary cell electrode comprising an electrode active material layer formed on a collector, the electrode active material layer having a density gradient developed with a gradient of a solid concentration increasing along a thickness from a surface of the electrode active material layer toward the collector, wherein the solid concentration is a concentration of an electrode active material or wherein the solid concentration includes concentrations of an electrode active material, an electrically conductive material, and a binder.

13. The fabrication method as claimed in claim 12, wherein the secondary cell electrode comprises a nonaqueous electrolyte cell-oriented electrode, comprising:
(a) changing a quantity of a solid to be added to compose the electrode active material layer, thereby preparing a plurality of kinds of electrode slurry different in concentration of the solid; and
(b) coating the collector with the plurality of kinds of electrode slurry so that the density gradient is developed with a gradient of an concentration of the solid sequentially increased from a surface of the electrode active material layer toward the collector, thereby laminating a plurality of thin film layers different in concentration of the solid.

14. The fabrication method as claimed in claim 13, wherein the thin film layer is coated by a thickness within a range of 100µm in the step (b).

15. The fabrication method as claimed in claim 13, wherein the electrode slurry is coated onto the collector by an ink jet method in the step (b).

16. The fabrication method as claimed in claim 15, wherein the ink jet method employs a piezo system.

17. The fabrication method as claimed in claim 12, wherein the secondary cell electrode comprises a gel electrolyte cell-oriented electrode, comprising:
(a) changing a quantity of an electrolyte salt to be added to compose the electrode active material layer, thereby preparing a plurality of kinds of electrode slurry different in concentration of the electrolyte salt; and
(b) coating the collector with the plurality of kinds of electrode slurry so that the density gradient is developed with a gradient of a concentration of the electrolyte salt from a surface of the electrode active material layer toward the collector, thereby laminating a plurality of thin film layers different in concentration of the electrolyte salt.

18. The fabrication method as claimed in claim 12, wherein the secondary cell electrode comprises a gel electrolyte cell-oriented electrode, comprising:
(a) changing a quantity of a film forming raw material to be added to compose the electrode active material layer, thereby preparing a plurality of kinds of electrode slurry different in concentration of the film forming raw material; and
(b) coating the collector with the plurality of kinds of electrode slurry so that the density gradient is developed with a gradient of a concentration of the film forming raw material from a surface of the electrode active material layer toward the collector, thereby laminating a plurality of thin film layers different in concentration of the film forming raw material.

19. The fabrication method as claimed in claim 12, wherein the secondary cell electrode comprises a gel electrolyte cell-oriented electrode, comprising:
(a) changing quantities of an electrolyte salt and a film forming raw material to be added to compose the electrode active material layer, thereby preparing a plurality of kinds of electrode slurry different in concentrations of the electrolyte salt and the film forming raw material; and
(b) coating the collector with the plurality of kinds of electrode slurry so that the density gradient is developed with gradients of concentrations of the electrolyte salt and the film forming raw material from a surface of the electrode active material layer toward the collector, thereby laminating a plurality of thin film layers different in concentrations of the electrolyte salt and film forming raw material.

20. The fabrication method as claimed In claim 17, wherein the thin film layer is coated by a thickness within a range of 1-100µm in the step (b).

21. The fabrication method as claimed in claim 18, wherein the thin film layer is coated by a thickness within a range of 100µm in the step (b).

22. The fabrication method as claimed in claim 19, wherein the thin film layer is coated by a thickness within a range of 1-100µm in the step (b).

23. The fabrication method as claimed in claim 17, wherein the electrode slurry is coated onto the collector by an ink jet method in the step (b).

24. The fabrication method as claimed in claim 18, wherein the electrode slurry is coated onto the collector by an ink jet method in the step (b).

25. The fabrication method as claimed in claim 19, wherein the electrode slurry is coated onto the collector by an ink jet method in the step (b).

26. The fabrication method as claimed in claim 23, wherein the ink jet method employs a piezo system.

27. The fabrication method as claimed in claim 24, wherein the Ink jet method employs a piezo system.

28. The fabrication method as claimed in claim 25, wherein the ink jet method employs a piezo system.

29. A secondary cell comprising the secondary cell electrode of claim 1.

30. The secondary cell as claimed in claim 29, wherein the secondary cell is a lithium ion secondary cell.

31. The secondary cell as claimed in claim 29, wherein the secondary cell is a bipolar cell.

32. The secondary cell as claimed in claim 29, comprising: a positive electrode comprising a first collector, and a positive-electrode oriented active material layer having a gradient of an electrolyte salt concentration increased along a thickness from a surface of the positive-electrode oriented active material layer toward the first collector; a negative electrode comprising a second collector, and a negative-electrode oriented active material layer having a gradient of an electrolyte salt concentration decreased along a thickness from a surface of the negative-electrode oriented active material layer toward the second collector; and an electrolyte layer.

33. The secondary cell as claimed in claim 29, comprising: a positive electrode comprising a first collector, and a positive-electrode oriented active material layer having a gradient of an electrolyte salt concentration decreased along a thickness from a surface of the positive-electrode oriented active material layer toward the first collector; a negative electrode comprising a second collector, and a negative'-electrode oriented active material layer having a gradient of an electrolyte salt concentration increased along a thickness from a surface of the negative-electrode oriented active material layer toward the second collector; and an electrolyte layer.

34. The secondary cell as claimed in claim 32, wherein the negative-electrode oriented active material layer has a gradient of a film forming material concentration increased along the thickness from the surface of the negative-electrode oriented active material layer toward the second collector.

35. The secondary cell as claimed in claim 33, wherein the negative-electrode oriented active material layer has a gradient of a film forming material concentration increased along the thickness from the surface of the negative-electrode oriented active material layer toward the second collector.

36. The secondary cell as claimed in claim 29, wherein the electrode active material layer comprises a negative-electrode oriented active material layer having a gradient of a film forming material concentration increased along a thickness from a surface of the negative-electrode oriented active material layer surface toward a collector.

37. The secondary cell as claimed in claim 29, wherein the density gradient is developed with a concentration gradient of an ingredient of an active material layer of the secondary cell electrode.

38. A complex cell comprising a plurality of secondary cells according to claim 1, connected to each other.

39. A complex cell comprising a plurality of secondary cells fabricated by the fabrication method of claim 12, connected to each other.

40. A vehicle including a secondary cell according to claim 1.

41. A vehicle including a secondary cell fabricated by the fabrication method of claim 12.

## Patentansprüche

1. Sekundärzellenelektrode, die eine Elektrodenaktivmaterialschicht aufweist, die auf einem Kollektor ausgebildet ist, wobei die Elektrodenaktivmaterialschicht einen Dichtegradienten aufweist, der mit einem Gradienten einer Feststoffkonzentration entwickelt ist, die entlang einer Dicke von einer Oberfläche der Elektrodenaktivmaterialschicht zum Kollektor hin zunimmt,
wobei die Feststoffkonzentration eine Konzentration eines Elektrodenaktivmaterials ist
oder
wobei die Feststoffkonzentration Konzentrationen eines Elektrodenaktivmaterials, eines elektrisch leitfähigen Materials und eines Bindemittels enthält.

2. Sekundärzellenelektrode nach Anspruch 1, die eine auf eine nicht-wässrige Elektrolytzelle ausgerichtete Elektrode aufweist.

3. Sekundärzellenelektrode nach Anspruch 2, wobei die Elektrodenaktivmaterialschicht eine Vielzahl von laminierten Dünnfilmschichten mit unterschiedlicher Feststoffkonzentration aufweist.

4. Sekundärzellenelektrode nach Anspruch 2, wobei die Elektrodenaktivmaterialschicht eine Dicke in einem Bereich von 1-100 µm aufweist.

5. Sekundärzellenelektrode nach Anspruch 1, die eine auf eine Gel-Elektrolytzelle ausgerichtete Elektrode aufweist, bei der die Elektrodenaktivmaterialschicht auf dem Kollektor mit einem Dichtegradienten ausgebildet ist, der mit einem Gradienten einer Konzentration eines Elektrolytsalzes entlang der Dicke von einer Oberfläche der Elektrodenaktivmaterialschicht zum Kollektor hin entwickelt ist.

6. Sekundärzellenelektrode nach Anspruch 5, wobei die Elektrodenaktivmaterialschicht eine Vielzahl von laminierten Dünnfilmschichten mit unterschiedlicher Konzentration des Elektrolytsalzes aufweist.

7. Sekundärzellenelektrode nach Anspruch 1, die eine auf eine Gel-Elektrolytzelle ausgerichtete Elektrode aufweist, bei der die Elektrodenaktivmaterialschicht auf dem Kollektor mit dem Dichtegradienten ausgebildet ist, der mit einem Gradienten einer Konzentration eines filmbildenden Materials entlang der Dicke von einer Oberfläche der Elektrodenaktivmaterialschicht zum Kollektor hin entwickelt ist.

8. Sekundärzellenelektrode nach Anspruch 7, wobei die Elektrodenaktivmaterialschicht eine Vielzahl von laminierten Dünnfilmschichten mit unterschiedlicher Konzentration des filmbindenden Materials aufweist.

9. Sekundärzellenelektrode nach Anspruch 1, die eine auf eine Gel-Elektrolytzelle ausgerichtete Elektrode aufweist, bei der die Elektrodenaktivmaterialschicht auf dem Kollektor mit dem Dichtegradienten ausgebildet ist, der mit Gradienten von Konzentrationen eines Elektrolytsalzes und eines filmbildenden Materials entlang der Dicke von einer Oberfläche der Elektrodenaktivmaterialschicht zum Kollektor hin entwickelt ist.

10. Sekundärzellenelektrode nach Anspruch 9, wobei die Elektrodenaktivmaterialschicht eine Vielzahl von laminierten Dünnfilmschichten mit unterschiedlichen Konzentrationen des Elektrolytsalzes und des filmbildenden Materials aufweist.

11. Sekundärzellenelektrode nach Anspruch 1, wobei die Elektrodenaktivmaterialschicht eine Dicke in einem Bereich von 1-100 µm aufweist.

12. Herstellungsverfahren, welches das Herstellen einer Sekundärzellenelektrode umfasst, die eine Elektrodenaktivmaterialschicht aufweist, die auf einem Kollektor ausgebildet ist, wobei die Elektrodenaktivmaterialschicht einen Dichtegradienten aufweist, der mit einem Gradienten einer Feststoffkonzentration entwickelt ist, die entlang einer Dicke von einer Oberfläche der Elektrodenaktivmaterialschicht zum Kollektor hin zunimmt, wobei die Feststoffkonzentration eine Konzentration eines Elektrodenaktivmaterials ist, oder wobei die Feststoffkonzentration Konzentrationen eines Elektrodenaktivmaterials, eines elektrisch leitfähigen Materials und eines Bindemittels enthält.

13. Herstellungsverfahren nach Anspruch 12, wobei die Sekundärzellenelektrode eine auf eine nicht-wässrige Elektrolytzelle ausgerichtete Elektrode aufweist, umfassend
(a) Ändern einer zum Zusammensetzen der Elektrodenaktivmaterialschicht hinzuzufügenden Menge eines Feststoffs, wodurch eine Vielzahl von Elektrodenschlammarten mit unterschiedlicher Konzentration des Feststoffs hergestellt werden; und
(b) Beschichten des Kollektors mit der Vielzahl von Elektrodenschlammarten, sodass der Dichtegradient mit einem Gradienten einer Konzentration des Feststoffs entwickelt wird, der von einer Oberfläche der Elektrodenaktivmaterialschicht zum Kollektor hin allmählich zunimmt, wodurch eine Vielzahl von Dünnfilmschichten mit unterschiedlicher Konzentration des Feststoffs laminiert werden.

14. Herstellungsverfahren nach Anspruch 13, wobei die Dünnfilmschicht mit einer Dicke in einem Bereich von 100 µm im Schritt (b) beschichtet wird.

15. Herstellungsverfahren nach Anspruch 13, wobei der Elektronenschlamm im Schritt (b) durch ein Tintenstrahlverfahren beschichtet wird.

16. Herstellungsverfahren nach Anspruch 15, wobei das Tintenstrahlverfahren ein Piezo-System einsetzt.

17. Herstellungsverfahren nach Anspruch 12, wobei die Sekundärzellenelektrode eine auf eine Gel-Elektrolytzelle ausgerichtete Elektrode aufweist, umfassend:
(a) Ändern einer zum Zusammensetzen der Elektrodenaktivmaterialschicht hinzuzufügenden Menge eines Feststoffs, wodurch eine Vielzahl von Elektrodenschlammarten mit unterschiedlicher Konzentration des Feststoffs hergestellt werden; und
(b) Beschichten des Kollektors mit der Vielzahl von Elektrodenschlammarten, sodass der Dichtegradient mit einem Gradienten einer Konzentration des Feststoffs entwickelt wird, der von einer Oberfläche der Elektrodenaktivmaterialschicht zum Kollektor hin allmählich zunimmt, wodurch eine Vielzahl von Dünnfilmschichten mit unterschiedlicher Konzentration des Feststoffs laminiert werden.

18. Herstellungsverfahren nach Anspruch 12, wobei die Sekundärzellenelektrode eine auf eine Gel-Elektrolytzelle ausgerichtete Elektrode aufweist, umfassend:
(a) Ändern einer zum Zusammensetzen der Elektrodenaktivmaterialschicht hinzuzufügenden Menge eines filmbildenden Rohmaterials, wodurch eine Vielzahl von Elektrodenschlammarten mit unterschiedlicher Konzentration des filmbildenden Rohmaterials hergestellt werden; und
(b) Beschichten des Kollektors mit der Vielzahl der Elektrodenschlammarten, sodass der Dichtegradient mit einem Gradienten einer Konzentration des filmbildenden Rohmaterials von einer Oberfläche der Elektrodenaktivmaterialschicht zum Kollektor hin entwickelt wird, wodurch eine Vielzahl von Dünnfilmschichten mit unterschiedlicher Konzentration des filmbildenden Rohmaterials laminiert werden.

19. Herstellungsverfahren nach Anspruch 12, wobei die Sekundärzellenelektrode eine auf eine Gel-Elektrolytzelle ausgerichtete Elektrode aufweist, umfassend:
(a) Ändern von zum Herstellen der Elektrodenaktivmaterialschicht hinzuzufügenden Mengen eines Elektrolytsalzes und eines filmbildenden Rohmaterials, wodurch eine Vielzahl von Elektrodenschlammarten mit unterschiedlichen Konzentrationen des Elektrolytsalzes und des filmbildenden Rohmaterials hergestellt werden; und
(b) Beschichten des Kollektors mit der Vielzahl von Elektrodenschlammarten, sodass der Dichtegradient mit Konzentrationsgradienten des Elektrolytsalzes und des filmbildenden Rohmaterials von einer Oberfläche der Elektrodenaktivmaterialschicht zum Kollektor hin entwickelt wird, wodurch eine Vielzahl von Dünnfilmschichten mit unterschiedlichen Konzentrationen des Elektrolytsalzes des filmbildenden Rohmaterials laminiert werden.

20. Herstellungsverfahren nach Anspruch 17, wobei die Dünnfilmschicht mit einer Dicke in einem Bereich von 1-100 µm im Schritt (b) beschichtet wird.

21. Herstellungsverfahren nach Anspruch 18, wobei die Dünnfilmschicht mit einer Dicke in einem Bereich von 100 µm im Schritt (b) beschichtet wird.

22. Herstellungsverfahren nach Anspruch 19, wobei die Dünnfilmschicht mit einer Dicke in einem Bereich von 1-100 µm im Schritt (b) beschichtet wird.

23. Herstellungsverfahren nach Anspruch 17, wobei der Elektrodenschlamm auf den Kollektor durch ein Tintenstrahlverfahren im Schritt (b) beschichtet wird.

24. Herstellungsverfahren nach Anspruch 18, wobei der Elektrodenschlamm auf den Kollektor durch ein Tintenstrahlverfahren im Schritt (b) beschichtet wird.

25. Herstellungsverfahren nach Anspruch 19, wobei der Elektrodenschlamm auf den Kollektor durch ein Tintenstrahlverfahren im Schritt (b) beschichtet wird.

26. Herstellungsverfahren nach Anspruch 23, wobei das Tintenstrahlverfahren ein Piezo-System einsetzt.

27. Herstellungsverfahren nach Anspruch 24, wobei das Tintenstrahlverfahren ein Piezo-System einsetzt.

28. Herstellungsverfahren nach Anspruch 25, wobei das Tintenstrahlverfahren ein Piezo-System einsetzt.

29. Sekundärzelle, die eine Sekundärzellenelektrode nach Anspruch 1 aufweist.

30. Sekundärzelle nach Anspruch 29, wobei die Sekundärzelle eine Lithiumionen-Sekundärzelle ist.

31. Sekundärzelle nach Anspruch 29, wobei die Sekundärzelle eine bipolare Zelle ist.

32. Sekundärzelle nach Anspruch 29, umfassend: eine positive Elektrode mit einem ersten Kollektor, und eine auf die positive Elektrode ausgerichtete Aktivmaterialschicht mit einem Gradienten einer Elektrolytsalzkonzentration, die entlang einer Dicke von einer Oberfläche der auf die positiven Elektrode ausgerichteten Aktivmaterialschicht zum ersten Kollektor hin zunimmt; eine negative Elektrode mit einem zweiten Kollektor, und eine auf die negative Elektrode ausgerichtete Aktivmaterialschicht mit einem Gradienten einer Elektrolytsalzkonzentration, die entlang einer Dicke von einer Oberfläche der auf die negative Elektrode ausgerichteten Aktivmaterialschicht zum zweiten Kollektor hin abnimmt; und eine Elektrolytschicht.

33. Sekundärzelle nach Anspruch 29, umfassend: eine positive Elektrode mit einem ersten Kollektor, und eine auf die positive Elektrode ausgerichtete Aktivmaterialschicht mit einem Gradient einer Elektrolytsalzkonzentration, die entlang einer Dicke von einer Oberfläche der auf die positive Elektrode ausgerichteten Aktivmaterialschicht zum ersten Kollektor hin abnimmt; eine negative Elektrode mit einem zweiten Kollektor, und eine auf die negative Elektrode ausgerichtete Aktivmaterialschicht mit einem Gradient einer Elektrolytsalzkonzentration, die entlang eine Dicke von einer Oberfläche der auf die negative Elektrode ausgerichteten Aktivmaterialschicht zum zweiten Kollektor hin zunimmt; und eine Elektrolytschicht.

34. Sekundärzelle nach Anspruch 32, wobei die auf die negative Elektrode ausgerichtete Aktivmaterialschicht einen Gradienten einer filmbildenden Materialkonzentration aufweist, die entlang der Dicke von der Oberfläche der auf die negative Elektrode ausgerichteten Aktivmaterialschicht zum zweiten Kollektor hin zunimmt.

35. Sekundärzelle nach Anspruch 33, wobei die auf die negative Elektrode ausgerichtete Aktivmaterialschicht einen Gradienten einer filmbildenden Materialkonzentration aufweist, die entlang der Dicke von der Oberfläche der auf die negative Elektrode ausgerichteten Aktivmaterialschicht zum zweiten Kollektor hin zunimmt.

36. Sekundärzelle nach Anspruch 29, wobei die Elektrodenaktivmaterialschicht eine auf die negative Elektrode ausgerichtete Aktivmaterialschicht mit einem Gradienten einer filmbildenden Materialkonzentration aufweist, die entlang einer Dicke von einer Oberfläche der auf die negative Elektrode ausgerichteten Aktivmaterialschicht zu einem Kollektor hin zunimmt.

37. Sekundärzelle nach Anspruch 29, wobei der Dichtegradient mit einem Konzentrationsgradienten eines Bestandteils einer Aktivmaterialschicht der Sekundärzellenelektrode entwickelt ist.

38. Komplexe Zelle, die eine Vielzahl von Sekundärzellen nach Anspruch 1 aufweist, die miteinander verbunden sind.

39. Komplexe Zelle, die eine Vielzahl von durch das Herstellungsverfahren nach Anspruch 12 hergestellten Sekundärzellen aufweist, die miteinander verbunden sind.

40. Fahrzeug, das eine Sekundärzelle nach Anspruch 1 umfasst.

41. Fahrzeug, das eine durch das Herstellungsverfahren nach Anspruch 12 hergestellte Sekundärzelle umfasst.

## Revendications

1. Électrode de pile secondaire comprenant une couche de matériau actif d'électrode formée sur un collecteur, la couche de matériau actif d'électrode ayant un gradient de densité développé avec un gradient de concentration en matière solide augmentant avec l'épaisseur à partir d'une surface de la couche de matériau actif d'électrode vers le collecteur,
dans laquelle la concentration en matière solide est une concentration d'un matériau actif d'électrode
ou
dans laquelle la concentration en matière solide comporte des concentrations d'un matériau actif d'électrode, d'un matériau électriquement conducteur et d'un liant.

2. Électrode de pile secondaire telle que revendiquée dans la revendication 1, comprenant une électrode pour pile à électrolyte non aqueux.

3. Électrode de pile secondaire telle que revendiquée dans la revendication 2,
dans laquelle la couche de matériau actif d'électrode comprend une pluralité de couches en film mince stratifiées ayant différentes concentrations de la matière solide.

4. Électrode de pile secondaire telle que revendiquée dans la revendication 2,
dans laquelle la couche de matériau actif d'électrode a une épaisseur comprise dans une plage allant de 1 à 100 µm.

5. Électrode de pile secondaire telle que revendiquée dans la revendication 1, comprenant une électrode pour pile à électrolyte en gel dans laquelle la couche de matériau actif d'électrode est formée sur le collecteur, ayant le gradient de densité développé avec un gradient d'une concentration d'un sel d'électrolyte avec l'épaisseur à partir d'une surface de la couche de matériau actif d'électrode vers le collecteur.

6. Électrode de pile secondaire telle que revendiquée dans la revendication 5,
dans laquelle la couche de matériau actif d'électrode comprend une pluralité de couches en film mince stratifiées ayant différentes concentrations de sel d'électrolyte.

7. Électrode de pile secondaire telle que revendiquée dans la revendication 1, comprenant une électrode pour pile à électrolyte en gel dans laquelle la couche de matériau actif d'électrode est formée sur le collecteur, ayant le gradient de densité développé avec un gradient d'une concentration d'une matière de formation de film avec l'épaisseur à partir d'une surface de la couche de matériau actif d'électrode vers le collecteur.

8. Électrode de pile secondaire telle que revendiquée dans la revendication 7,
dans laquelle la couche de matériau actif d'électrode comprend une pluralité de couches en film mince stratifiées ayant différentes concentrations de la matière de formation de film.

9. Électrode de pile secondaire telle que revendiquée dans la revendication 1, comprenant une électrode pour pile à électrolyte en gel dans laquelle la couche de matériau actif d'électrode est formée sur le collecteur, ayant le gradient de densité développé avec des gradients de concentrations d'un sel d'électrolyte et d'une matière de formation de film avec l'épaisseur à partir d'une surface de la couche de matériau actif d'électrode vers le collecteur.

10. Électrode de pile secondaire telle que revendiquée dans la revendication 9, dans laquelle la couche de matériau actif d'électrode comprend une pluralité de couches en film mince stratifiées ayant différentes concentrations du sel d'électrolyte et de la matière de formation de film.

11. Électrode de pile secondaire telle que revendiquée dans la revendication 1, dans laquelle la couche de matériau actif d'électrode a une épaisseur comprise dans une plage allant de 1 à 100 µm.

12. Procédé de fabrication comprenant la fabrication d'une électrode de pile secondaire comprenant une couche de matériau actif d'électrode formée sur un collecteur, la couche de matériau actif d'électrode ayant un gradient de densité développé avec un gradient d'une concentration en matière solide augmentant avec l'épaisseur à partir d'une surface de la couche de matériau actif d'électrode vers le collecteur, dans laquelle la concentration en matière solide est une concentration d'un matériau actif d'électrode ou dans laquelle la concentration en matière solide comporte des concentrations d'un matériau actif d'électrode, d'un matériau électriquement conducteur, et d'un liant.

13. Procédé de fabrication tel que revendiqué dans la revendication 12, dans lequel l'électrode de pile secondaire comprend une électrode pour pile à électrolyte non aqueux, comprenant le fait :
(a) de modifier une quantité d'une matière solide devant être ajoutée pour composer la couche de matériau actif d'électrode, préparant ainsi une pluralité de types de suspensions d'électrode ayant différentes concentrations da la matière solide ; et
(b) de revêtir le collecteur avec la pluralité de types de suspensions d'électrode de sorte que le gradient de densité soit développé avec un gradient d'une concentration de matière solide augmentée progressivement à partir d'une surface de la couche de matériau actif d'électrode vers le collecteur, stratifiant ainsi une pluralité de couches en film mince ayant différentes concentrations de matière solide.

14. Procédé de fabrication tel que revendiqué dans la revendication 13, dans lequel la couche en film mince est déposée avec une épaisseur comprise dans une plage allant de 1 à 100 µm à l'étape (b).

15. Procédé de fabrication tel que revendiqué dans la revendication 13, dans lequel la suspension d'électrode est déposée sur le collecteur par un procédé à jet d'encre à l'étape (b).

16. Procédé de fabrication tel que revendiqué dans la revendication 15, dans lequel le procédé à jet d'encre utilise un système piézo-électrique.

17. Procédé de fabrication tel que revendiqué dans la revendication 12, dans lequel l'électrode de pile secondaire comprend une électrode pour pile à électrolyte en gel, comprenant le fait :
(a) de modifier une quantité d'un sel d'électrolyte devant être ajouté pour composer la couche de matériau actif d'électrode, préparant ainsi une pluralité de types de suspensions d'électrode ayant différentes concentrations du sel d'électrolyte ; et
(b) de revêtir le collecteur avec la pluralité de types de suspensions d'électrode de sorte que le gradient de densité soit développé avec un gradient de concentration du sel d'électrolyte à partir d'une surface de la couche de matériau actif d'électrode vers le collecteur, stratifiant ainsi une pluralité de couches en film mince ayant différentes concentrations du sel d'électrolyte.

18. Procédé de fabrication tel que revendiqué dans la revendication 12, dans lequel l'électrode de pile secondaire comprend une électrode pour pile à électrolyte en gel, comprenant le fait :
(a) de modifier une quantité d'une matière première de formation de film devant être ajoutée pour composer la couche de matériau actif d'électrode, préparant ainsi une pluralité de types de suspensions d'électrode ayant différentes concentrations de matière première de formation du film ; et
(b) de revêtir le collecteur avec la pluralité de types de suspensions d'électrode de sorte que le gradient de densité soit développé avec un gradient de concentration de matière première de formation du film à partir d'une surface de la couche de matériau actif d'électrode vers le collecteur, stratifiant ainsi une pluralité de couches en film mince ayant différentes concentrations de matière première de formation de film.

19. Procédé de fabrication tel que revendiqué dans la revendication 12, dans lequel l'électrode de pile secondaire comprend une électrode pour pile à électrolyte en gel, comprenant le fait :
(a) de modifier des quantités d'un sel d'électrolyte et d'une matière première de formation de film devant être ajoutés pour composer la couche de matériau actif d'électrode, préparant ainsi une pluralité de types de suspensions d'électrode ayant différentes concentrations du sel d'électrolyte et de la matière première de formation de film ; et
(b) de revêtir le collecteur avec la pluralité de types de suspensions d'électrode de sorte que le gradient de densité soit développé avec des gradients de concentrations du sel d'électrolyte et de la matière première de formation de film à partir d'une surface de la couche de matériau actif d'électrode vers le collecteur, stratifiant ainsi une pluralité de couches en film mince ayant différentes concentrations du sel d'électrolyte et de la matière première de formation de film.

20. Procédé de fabrication tel que revendiqué dans la revendication 17, dans lequel la couche en film mince est déposée avec une épaisseur comprise dans une plage allant de 1 à 100 µm dans l'étape (b).

21. Procédé de fabrication tel que revendiqué dans la revendication 18, dans lequel la couche en film mince est déposée avec une épaisseur comprise dans une plage allant de 1 à 100 µm dans l'étape (b).

22. Procédé de fabrication tel que revendiqué dans la revendication 19, dans lequel la couche en film mince est revêtue d'une épaisseur comprise dans une plage allant de 1 à 100 µm dans l'étape (b).

23. Procédé de fabrication tel que revendiqué dans la revendication 17, dans lequel la suspension d'électrode est déposée sur le collecteur par un procédé à jet d'encre dans l'étape (b).

24. Procédé de fabrication tel que revendiqué dans la revendication 18, dans lequel la suspension d'électrode est déposée sur le collecteur par un procédé à jet d'encre dans l'étape (b).

25. Procédé de fabrication tel que revendiqué dans la revendication 19, dans lequel la suspension d'électrode est déposée sur le collecteur par un procédé à jet d'encre dans l'étape (b).

26. Procédé de fabrication tel que revendiqué dans la revendication 23, dans lequel le procédé à jet d'encre utilise un système piézo-électrique.

27. Procédé de fabrication tel que revendiqué dans la revendication 24, dans lequel le procédé à jet d'encre utilise un système piézo-électrique.

28. Procédé de fabrication tel que revendiqué dans la revendication 25, dans lequel le procédé à jet d'encre utilise un système piézo-électrique.

29. Pile secondaire comprenant l'électrode de pile secondaire de la revendication 1.

30. Pile secondaire telle que revendiquée dans la revendication 29, dans laquelle la pile secondaire est une pile secondaire au lithium-ion.

31. Pile secondaire telle que revendiquée dans la revendication 29, dans laquelle la pile secondaire est une pile bipolaire.

32. Pile secondaire telle que revendiquée dans la revendication 29, comprenant : une électrode positive comprenant un premier collecteur, et une couche de matériau actif pour électrode positive ayant un gradient de concentration en sel d'électrolyte augmentée avec l'épaisseur à partir d'une surface de la couche de matériau actif pour électrode positive vers le premier collecteur; une électrode négative comprenant un deuxième collecteur, et une couche de matériau actif pour électrode négative ayant un gradient de concentration en sel d'électrolyte diminué avec l'épaisseur à partir d'une surface de la couche de matériau actif pour électrode négative vers le deuxième collecteur ; et une couche d'électrolyte.

33. Pile secondaire telle que revendiquée dans la revendication 29, comprenant: une électrode positive comprenant un premier collecteur, et une couche de matériau actif pour électrode positive ayant un gradient de concentration en sel d'électrolyte diminué avec l'épaisseur à partir d'une surface de la couche de matériau actif pour électrode positive vers le premier collecteur ; une électrode négative comprenant un deuxième collecteur, et une couche de matériau actif pour électrode négative ayant un gradient de concentration en sel d'électrolyte augmenté avec l'épaisseur à partir d'une surface de la couche de matériau actif pour électrode négative vers le deuxième collecteur ; et une couche d'électrolyte.

34. Pile secondaire telle que revendiquée dans la revendication 32, dans laquelle la couche de matériau actif pour électrode négative a un gradient de concentration en matière de formation de film augmenté avec l'épaisseur de la à partir d'une surface de la couche de matériau actif pour électrode négative vers le deuxième collecteur.

35. Pile secondaire telle que revendiquée dans la revendication 33, dans laquelle la couche de matériau actif pour électrode négative a un gradient de concentration en matière de formation de film augmentée avec l'épaisseur de la surface de la couche de matériau actif pour électrode négative vers le deuxième collecteur.

36. Pile secondaire telle que revendiquée dans la revendication 29, dans laquelle la couche de matériau actif d'électrode comprend une couche de matériau actif pour électrode négative ayant un gradient d'une concentration en matière de formation de film augmentée avec l'épaisseur à partir d'une surface de la couche de matériau actif pour électrode négative vers un collecteur.

37. Pile secondaire telle que revendiquée dans la revendication 29, dans laquelle le gradient de densité est développé avec un gradient de concentration d'un ingrédient d'une couche de matériau actif de l'électrode de pile secondaire.

38. Pile complexe comprenant une pluralité de piles secondaires selon la revendication 1, reliées les unes aux autres.

39. Pile complexe comprenant une pluralité de piles secondaires fabriquées par le procédé de fabrication de la revendication 12, reliées les unes aux autres.

40. Véhicule comportant une pile secondaire selon la revendication 1.

41. Véhicule comportant une pile secondaire fabriquée par le procédé de fabrication de la revendication 12.
